(19) Europäisches Patentamt / European Patent Office / Office européen des brevets

(11) **EP 2 645 638 A1**

(12) **EUROPEAN PATENT APPLICATION**

(43) Date of publication:
**02.10.2013 Bulletin 2013/40**

(51) Int Cl.:
***H04L 12/423*** (2006.01)

(21) Application number: **12188283.1**

(22) Date of filing: **12.10.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **29.03.2012 EP 12162253**

(71) Applicant: **ROBERT BOSCH GMBH**
**70442 Stuttgart (DE)**

(72) Inventors:
• **Rohatschek, Andreas-Juergen**
  **73249 Wernau/Neckar (DE)**
• **Thoss, Dieter**
  **71701 Schwieberdingen (DE)**
• **Huck, Thorsten**
  **71691 Freiberg (DE)**
• **Todorov, Stoyan**
  **68165 Mannheim (DE)**

(54) **Communication system with chain or ring topology**

(57) The invention refers to a communication system comprising at least two communication modules serially interconnected by a communication medium having a daisy chain ring topology, wherein at least one of the modules acts as a master-module and the other modules act as slave modules and wherein data is transmitted across the communication medium in data frames. In order to provide a communication system, in particular for an interchip communication, which allows fast data transmission and at the same time is simple, robust and inexpensive, it is suggested that the master module is adapted to transmit a data frame, which is addressed to at least one of the slave modules, to the first slave module in the daisy chain ring topology, that all slave modules are adapted to pass through the data frame to the next module in the daisy chain ring topology and in that the master module is adapted to receive the data frame from the last slave module in the daisy chain ring topology and to check whether the data frame has been successfully transmitted along the entire daisy chain ring topology and/or successfully received by the at least one slave module it was addressed to.

Fig. 1

EP 2 645 638 A1

## Description

Prior Art

The present invention refers to a communication system comprising at least two communication modules serially interconnected by a communication medium having a daisy chain ring topology. At least one of the modules acts as a master-module and the other modules act as slave modules. Data is transmitted across the communication medium in data frames. Furthermore, the invention refers to a master communication module and to a slave communication module, respectively, of such a communication system. Finally, the invention refers to a method for transmitting data within such a communication system.

The communication system of the above identified kind is preferably used for data communication over relatively short distances, for example between components of a control unit, that is for a so-called interchip communication. Such a known communication system is, for example, the Serial Peripheral Interface (SPI) bus. SPI is a synchronous serial data link standard that operates in full duplex mode. Devices communicate in master/slave mode where the master device initiates the data frame. Multiple slave devices are allowed with individual slave select (chip select) lines. Sometimes SPI is called a four-wire serial bus, because each slave is connected to four lines (SCLK: serial clock, SIMO (slave in master out)/ MOSI (master out slave in), SOMI (slave out master in)/ MISO (master in slave out), and SS (slave select)). The master is provided with a SS-line for each of the slaves it is connected to. Sometimes, SPI devices use a further signal line to send an interrupt signal to a host CPU. Interrupts are not covered by the SPI standard; their usage is neither forbidden nor specified by the standard.

SPI is commonly used for communication in embedded systems, for example in system- on- a- chip processors, both with higher end 32- bit processors such as those using ARM (from ARM Ltd., Cambridge, UK), MIPS (from MIPS Technologies Inc., Sunnyvale, USA), or PowerPC (from Apple, IBM and Motorola, now Freescale) and with other microcontrollers such as the AVR (from Atmel Corp., San Jose, USA), PIC (from Microchip Technology Inc., Chandler, USA), and MSP430 (from Texas Instruments, Dallas, USA) . These chips usually include SPI controllers capable of running in either master or slave mode. Chip or FPGA (Field Programmable Gate Array) based designs sometimes use SPI to communicate between internal components.

The full-duplex capability makes SPI very simple and efficient for single master/single slave applications. Some devices use the full-duplex mode to implement an efficient, swift data stream for applications such as digital audio, digital signal processing, or telecommunications channels, but most off-the-shelf chips stick to half-duplex request/response protocols.

SPI is used to talk to a variety of peripherals, such as

- Sensors: temperature, pressure, ADC (Analog- to- digital converters), touch screens, video game controllers
- Control devices: audio codecs, digital potentiometers, DAC (Digital- to- analog converters)
- Camera lenses: e.g. Canon EF lens mount
- Communications: Ethernet, USB, USART, CAN, IEEE 802.15.4, IEEE 802.11, handheld video games
- Memory: Flash memory and EEPROM
- Real-time clocks
- LCD displays, sometimes even for managing image data
- Any MMC (Multi Media Card) or SD (Secure Digital) card (including SDIO variant)
- For high performance systems, FPGAs sometimes use SPI to interface as a slave to a host, as a master to sensors, or for flash memory used to bootstrap if they are SRAM-based.

With multiple slave devices the SPI usually has a bus topology in which the master module is connected to each of the slave modules. A separate SS line is  provided for each of the slaves. However, in some cases the SPI can also have a daisy chain ring topology. Some devices for use in an SPI bus are designed to be capable of being connected in a daisy chain configuration, the first slave output being connected to the second slave input, etc. The SPI port of each slave is designed to send out during the second group of clock pulses an exact copy of what it received during the first group of clock pulses. The whole chain acts as an SPI communication shift register; daisy chaining is often done with shift registers to provide a bank of inputs or outputs through SPI. Such a feature only requires a single SS line from the master, rather than a separate SS line for each slave.

SPI has the following disadvantages:

- a large number of separate lines is necessary for interconnecting the SPI master module with the SPI slave modules, in particular a CLK line an SS line and, if Interrupts are regarded, an Interrupt line is necessary,
- a large number of pins is necessary at the SPI communication modules, for connecting the lines to the modules,
- the SCLK line offers only synchronization signals to the slaves and does not provide a real clock signal to the slaves, which is in particular disadvantageous if the SPI devices have a daisy chain ring topology because each slave device can only be synchronized relatively to the preceding device,

- if the SPI has a daisy chain ring topology, the data frames are passed along the communication medium with a large latency, because data contained in the data frames is received by each of the slaves and stored in an input/ output register and then processed in order to determine whether the data frame is addressed to the slave module or not,
- only a reduced data transmission rate,
- no hardware slave acknowledgement (the master could be transmitting to nowhere and not know it),
- Supports only one master device,
- no error-checking protocol is defined,
- generally prone to noise spikes causing faulty communication, and
- does not support hot plugging (dynamically adding nodes).

Therefore, it is an object of the present invention to provide a communication system, in particular for an interchip communication, which allows fast data transmission and at the same time is simple, robust and inexpensive.

This objective is solved by a communication system of the above mentioned kind, characterized in that the master module is adapted to transmit a data frame, which is addressed to at least one of the slave modules, to the first slave module in the daisy chain ring topology, that all slave modules are adapted to pass through the data frame to the next module in the daisy chain ring topology and in that the master module is adapted to receive the data frame from the last slave module in the daisy chain ring topology and to check whether the data frame has been successfully transmitted along the entire daisy chain ring topology and/or successfully received by the at least one slave module it was addressed to.

The communication system according to the present invention has the advantage that it is simple, robust and inexpensive and at the same time is provided with a hardware slave acknowledgment, in order to give the master the opportunity to check whether a data frame has been correctly transmitted to and received by the addressed slave module. If the data frame was not correctly received and/or transmitted at the addressed slave module it is sent once more by the master module. In order to distinguish data frames sent once more from those sent for the first time, a Frame ID bit FID1 is provided in a Unicast Data Frame (see section 2.9.1).

Preferably, the master compares the data of a data frame received from the last slave module of the daisy chain ring topology with the data of the data frame he previously transmitted to the first slave module of the daisy chain ring topology addressed to one or more slave modules of the communication system. If the data is identical, this indicates that the data frame has been correctly transmitted along the entire daisy chain ring topology from module to module.

The slave modules may replace any number of bits of a data field (DF) of a Unicast Data Frame. The DF is the "payload" of the Unicast Data Frame. The modified data can contain information intended for the master and indicating one or more of: a correct reception of the data frame at the slave module it was addressed to, an answer to a master's question, information on the functionality of the slave module, etc. Of course, only that slave module, for which the data frame was intended, will replace bits in the data frame's data field. The data frame with the modified data will be forwarded to the next communication module in the daisy chain ring topology until it reaches the master module again. Those parts of the data which have been modified by one or more slave modules cannot be used by the master module for checking a correct transmission of the data frame along the daisy chain ring topology. However, this can be performed by comparing the unchanged parts of the received data frame with the corresponding parts of the previously transmitted data frame.

According to a preferred embodiment of the present invention, each of the slave modules is adapted to receive and process the data frame and the data contained therein only if the data frame is addressed to the slave module. If the data frame is not addressed to the slave module, it simply passes through the data frame to the next communication module in the daisy chain ring topology without storing it in its input/output storage means and without processing the data contained therein. The slave modules can determine whether a data frame arriving at the slave is addressed to the slave module or not by comparing the slave address stored in a slave address field SLADR of a Unicast Data Frame (indicated by Frame ID bit FID0 = 0) or of an Interrupt Frame (indicated by Frame ID bits FID0 = 1 and FID1 = 1) to its own address value. If the arriving data frame is a Multicast Data Frame (indicated by Frame ID bits FID0 = 1 and FID1 = 0) the data frame is intended for the slave module anyway and will be received and processed accordingly.

It is further suggested that each of the slave modules comprises input/ output storing means for temporarily storing at least part of data frames to be transmitted across the communication medium and/or at least part of data frames received across the communication medium and intended for the slave module and comprises further storing means located within the daisy chain ring topology of the communication medium and having a smaller storage capacity than the input/ output storing means and being adapted for passing through data frames transmitted across the communication medium.

Preferably, each of the slave modules is adapted to forward from its further storage means to its input/ output storage means at least part of a data frame transmitted across the communication medium only if the data frame currently passing through the further storage means is addressed to the slave module.

The further storage means preferably comprise a shift register having a size of only a few bits (e.g. up to 5 bits), preferably a 1-Bit shift register. This shift register is located within the daisy chain ring topology. The small size of the shift register has the advantage that the data frames can be passed along the daisy chain ring topology from module to module with a very small latency, in the case of a 1-Bit shift register with only 1 bit latency. This small latency is just enough in order to perform a bit-by-bit comparison of the slave address stored in the arriving data frame to the value stored in the slave module. Furthermore, jitter in the arriving data frame can be compensated before passing it through to the subsequent communication module in the daisy chain ring topology.

According to the present invention this small latency can be achieved due to the small shift register located directly in the daisy chain ring topology and provided additionally to the much larger input/ output storage means, for example shift registers, of the slave modules. The input/ output shift registers have a size of at least 8 bits, and can have a size of up to 16, 32 or even 64 bits. Of course, this is not a limiting feature of the present invention. The shift registers can be of different size, too. In order to perform fully functional data processing in the slave modules large input/ output shift registers are essential. However, from a view point of passing through data frames from one communication module to the next communication module of a daisy chain ring topology as fast as possible, that is with a latency as small as possible, these rather large input/ output shift registers are disadvantageous. Therefore, according to the invention an additional smaller shift register has been provided in each of the communication modules and a data frame arriving at the slave module can be passed along to the next communication module in the daisy chain ring topology through this small shift register with a very small latency. A data frame arriving at a slave module or the data contained therein, respectively, is forwarded to the input/ output shift register of the slave module only if it has been determined that the data frame is intended for this slave module.

The communication system according to the present invention can be provided with the additional small shift register and can have the advantages connected thereto even if the master module does not receive a previously transmitted data frame again at the end of the daisy chain in order to check whether the data frame has been successfully transmitted along the entire daisy chain ring topology and received by the at least one slave module it was addressed to.

According to yet another preferred embodiment of the present invention, it is suggested that data frames are continuously transmitted across the communication medium. In particular, as long as no payload data is to be transmitted in the communication system, the master module transmits data frames with no payload data, so-called Interrupt Frame (see section 2.9.3). Additionally, the Interrupt Frames can give each slave module the opportunity to assert an Interrupt to the master module. Furthermore, with an Interrupt Frame each slave module can calculate its own address during a startup or initialization phase (communication system in the "unlocked state").

According to yet another preferred embodiment of the present invention, it is suggested that the master module is adapted to transmit a dedicated data frame, the so-called Interframe Symbol (IFS), between each two data frames transmitted across the communication medium. The master sends "Unicast Data Frames", "Multicast Data Frames" and "Interrupt Frames", each two of these separated by "Interframe Symbols" (see section 2.7.1). Preferably, each of the slave modules is adapted to determine the end of a data frame or the beginning of a new data frame respectively by means of the Interframe Symbol. Further, it is suggested that each of the slave modules is adapted to synchronize its local clock by means of the Interframe Symbol. Hence, the communication system according to the present invention allows the master module to transmit a clock signal (and not only a synchronization signal) without the need for any additional CLK lines.

In the communication system according to the present invention, clock signals and data are transmitted on the same communication medium. This avoids any skews between clock and data and keeps the number of I/O pins at the communication modules as low as possible. The receiving slave module needs to distinguish clock and data edges in the arriving bit stream. This is accomplished with the IFS that contain a defined code violation. The IFS violates the code in relation to the coded data. For example, MFM (Modified Frequency Modulation) coding is used for coding the data frames to be transmitted across the daisy chain ring topology. This implies a certain way or type of coding the bits to be transmitted across the communication medium. The IFS contains a code violation in respect to the correct coding of the bits according to the used coding scheme. The IFS is also used to detect the end of a data frame.

The present invention also refers to a communication module of a communication system of the above-identified type, the module acting as a master and being characterized in that it is adapted to transmit a data frame, which is addressed to at least one of the slave modules, to the first slave module in the daisy chain ring topology, which passes through the data frame to the next module in the daisy chain ring topology and so on and in that the master module is adapted to receive the data frame from the last slave module in the daisy chain ring topology and to check whether the data frame has been successfully transmitted along the entire daisy chain ring topology and/or successfully received by the at least one slave module it was addressed to.

Furthermore, the present invention also refers to a communication module of a communication system of the above- identified type, the module acting as a slave and being characterized in that it is adapted to pass through a data frame received across the communication medium from a preceding module in the daisy chain ring topology to the successive module in the daisy chain ring topology, the data frame being addressed to at least one of the slave modules, and the slave module is adapted to receive and process the data frame and the data contained therein, respectively, only if the data frame is addressed to the slave module.

Finally, the present invention also refers to a method for transmitting data within a communication system of the above- identified type, the method being characterized in that the master module transmits a data frame containing the data to be transmitted, which is addressed to at least one of the slave modules, to the first slave module in the daisy chain ring topology, that the first slave module passes through the data frame to the next module in the daisy chain ring topology and so on until the master module receives the data frame from the last slave module in the daisy chain ring topology and checks whether the data frame has been successfully transmitted along the entire daisy chain ring topology and/or successfully received by the at least one slave module it was addressed to.

One more important aspect of the invention is the multi- master configuration of the communication system. The communication system uses only one master at a time. However, all communication modules are connected to each other within the daisy chain ring topology in the same way. On a high protocol level, the current master module could grant the master role to a slave module and reset the communication system. After the reset the communication module, which originally was a slave, will take over the master role and initiate the communication system. This may be useful in cases where the master and slave roles have to change, but not too often, e.g. for dedicated ECU states (normal, ...) . Of course, the master role can only be taken over by slaves which are capable of playing the role of the bus master.

For the following detailed description of the invention the communication system according to the present invention has been named "Serial WireRing" or "SWR".

Disclosure of the Invention

Preferred embodiments of the present invention and their advantages are described hereinafter referring to the figures. The figures show:

Fig. 1 a Serial WireRing topology,
Fig. 2 an MFM coding,
Fig. 3 an Interframe Symbol IFS,
Fig. 4 a simple full digital PLL,
Fig. 5 a Unicast Data Frame,

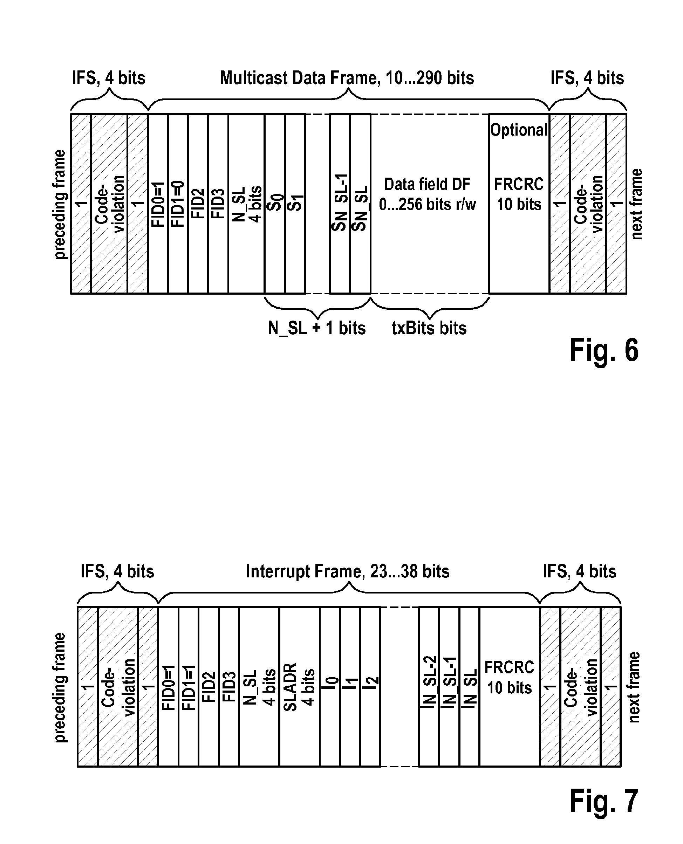

Fig. 6 a Multicast Data Frame,
Fig. 7 an Interrupt Frame,
Fig. 8 a tolerable Bit Error Rate versus Bit Rate,
Fig. 9 a continuous IFS signal during an unlocked state of the Serial WireRing,
Fig. 10 Pointer Registers and Memory Structures,
Fig. 11 a Low Speed Connection,
Fig. 12 a Medium Speed Connection,
Fig. 13 a High Speed TIA/EIA-644 LVDS Connection,
Fig. 14 using an External Switch for Fault Tolerance,
Fig. 15 a topology comprising a master with Loop Line, three normal slaves, and four Loop Line enabled slaves,
Fig. 16 the topology of Fig. 15 with slave 3 defective,
Fig. 17 a topology comprising slaves in normal mode only,
Fig. 18 a topology comprising Loop Line enabled slaves only,
Fig. 19 a Slave Loop Switch SLS,
Fig. 20 a Master Loop Switch MLS,
Fig. 21 a typical SPI circuit with some 5 V slaves known from the prior art,
Fig. 22 the circuit shown in Fig. 21 but with the Serial WireRing according to the present invention,
Fig. 23 a typical MSC circuit known from the prior art, and
Fig. 24 the circuit shown in Fig. 23 but with the Serial WireRing according to the present invention.

## 1 Introduction

Serial WireRing was developed as an alternative to SPI, with 3 main improvements on speed, pin count and safety:

- ● Faster: up to some 100 Mbit/s.
- ● Less pins for master and slave: 2 single ended, 4 differential.

No chip selects lines.
No clock lines.
No interrupt lines.
● Easy integration into high safety ISO26262 ASIL-D and IEC 61508 SIL 4 systems.

The advantages of SPI are preserved:

● simple
● robust
● inexpensive

Serial WireRing is not compatible with SPI. For the transition time, it is recommended to implement SPI <u>and</u> Serial WireRing on the controller  side. Cost for this is negligible. This way, SPI and Serial WireRing can be used simultaneously as long as needed.

Serial WireRing is not a LAN (local area network) or WAN (wide area network). It is to connect integrated circuits mounted on a PCB (printed circuit board) in a fixed way. It is not intended for cables and connectors that can be accessed by a user. It is not intended to replace Ethernet, USB (), Fire-Wire, SATA, PCI, CAN, FlexRay, Most, LIN, etc. However, for some use cases it may nevertheless be used for longer distances over electrical or optical cable. This is easy because there are only 2 wires to connect, with relaxed timing relationship. Especially there is no skew issue, even at very high data rates.

Serial WireRing was developed strictly following the KISS (keep it simple, stupid) principle. The design goal was to cover all reasonable use cases (but not more) without implementing something special for only one or few use case(s). As a result, Serial WireRing is believed to be very generic and straightforward.

## 2 <u>Requirements Specification</u>

The requirements are spread over this functional description. Hopefully this structure ensures a good understanding. The "requirements" are mere suggestions of certain features of the communication system according to the present invention. Not all of the "requirements" are mandatory for the communication system to work according to the present invention.

There is no detailed electrical specification. This is because the options to connect devices on a PCB are too many, and there will be new I/O standards to come. So it is up to the manufacturer to equip its Serial WireRing device with inputs and outputs that suit the needs of the application and the customer. Technical progress and the market will ensure that Serial WireRing devices are easy to connect to each other. Hints are given in 3.1.

### 2.1 Overview

Here's an overview about Serial WireRing, details are explained in the following sections:

● Daisy chain ring topology.
● One-way point-to-point connections from device to device.
● 2...17 devices: 1 master + 1...16 slaves.
● Each device has 1 input and 1 output.
● Single ended (2 pins / device) or differential (4 pins / device) or optical signaling, may be mixed.
● Each slave outputs the data that it receives with 1 bit delay.
● Full duplex operation (although physical connections are simplex).
● Clock & data are interleaved, MFM coded.
● The master sends "Unicast Data Frames", "Multicast Data Frames" and "Interrupt Frames", separated by "Interframe Symbols".
● Slave-to-master interrupt with predictable latency.
● All slaves lock on the master's clock, the whole ring is synchronous.
● The master initiates each transfer. No bus arbitration. No token.
● To provide continuous clocking to the slaves, Serial WireRing is never quiescent.
● 10-bit-CRC yields > 99.9 % transmission error fault coverage.
● The master receives each frame it has sent and checks it.
● Automatic re-transmission of disturbed frames.
● The master holds two separate Unicast Data Frame queues for each slave, "regular" and "interrupt".
● The master holds a single Multicast Data Frame queue for all slaves.

- 8-bit priority for each Data Frame, scheduled over all queues.
- Autonomous processing of all queues without software.
- Direct data transfer from/to memory for each slave.

**2.2 EMI**

A new bus calls for very high data rates. But EMI standards are getting more and more restrictive. This is a main issue, because radiated power rises with the square of the bus clock frequency.

The traditional way to deal with this issue is to use an LVDS connection instead of a single-ended CMOS connection. Because LVDS uses symmetric signaling, low voltage levels, a matched impedance transmission line and a line termination, emissions drop by 20...30 dB. Furthermore LVDS doesn't inject current peaks into the supply rails, thus reducing noise. However LVDS has a price to pay: 2 pads & lines instead of 1, power consumption is high and the pad circuitry comprises a voltage reference, current sources, differential comparators and other analog circuitry. This circuitry consumes a lot of silicon space, compared to a standard CMOS I/O. Thus, for a pad-restricted low cost system, LVDS is too expensive.

Of course, Serial WireRing can also be used with LVDS. But Serial WireRing was designed to be EMI-friendly from the scratch, even with simple single-ended CMOS connections:

- Only short signal lines. The spatial emission area is reduced. This in turn reduces the radiated power.
- The supply (or ground) point of the signal source is never far away from the sink (mainly the stray capacitance of the signal line). So the spatial emission area of the power rails is reduced. This again reduces the radiated power.
- Each signal line has exactly one source and one sink, no tapping. This makes it easy to absorb the reflected energy at a defined point, namely at one end of the line.
- Since the line is short, it has low capacity. Less current is needed to drive it. The driver's source resistance can be high and can be designed or configured to match the signal line impedance. This helps to damp the reflected energy on the signal line. Thus less energy is radiated.
- The lower drive current also reduces the noise and emission of the supply rails.
- The one-clock delay of each device causes the radiated waves to be out of phase. So the total emission spectrum of the whole ring is more spread and has lower peaks.
- When a device changes the data stream, it will change the number and the position of the edges, according to the MFM coding. If the number of edges is changed by an odd value, the polarity of the device's output signal, related to the input signal, changes. This polarity change occurs frequently and further prohibits the radiated waves to interfere in phase.

All these properties enable Serial WireRing to work with simple single-ended CMOS connections well beyond 10 Mbit/s, even in a complex system with many devices. SPI is limited to 1...2 Mbit/s under the same conditions.

Similar arguments apply to electromagnetic emission. If the PLLs of the slaves are well designed, the Serial WireRing is at least as robust as SPI.

**2.3 Topology**

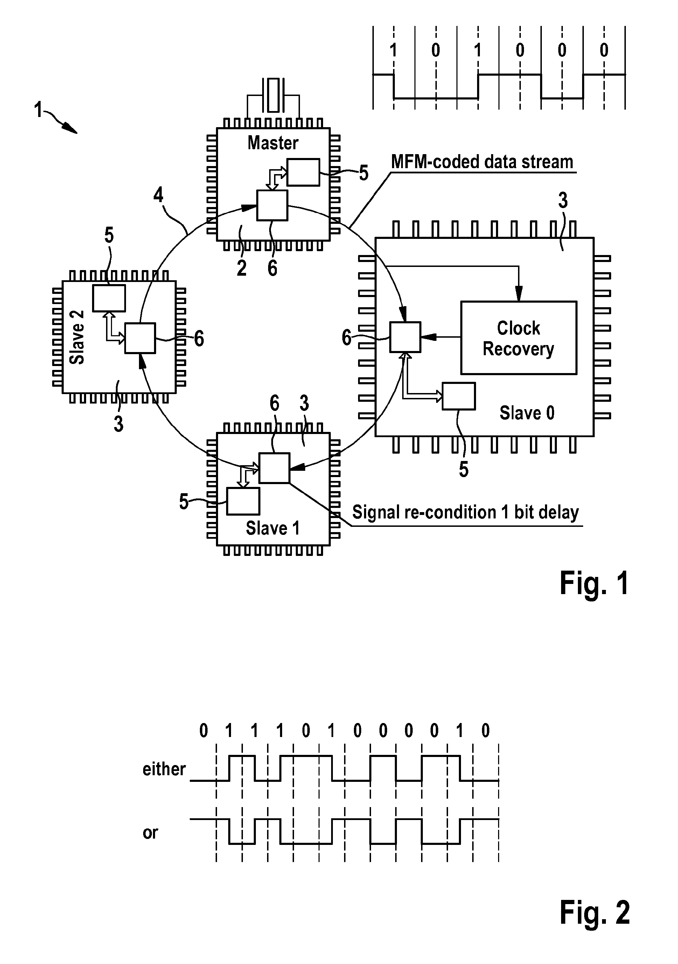

High speed, low EMI and low power consumption cannot be achieved simultaneously with a traditional bus. Point- to- point connections are inevitable. The only way to connect multiple devices in this way is a ring. So Serial WireRing uses a ring topology as shown in Fig. 1. Connections are CMOS (Complimentary Metal Oxide Semiconductor), TTL (Transistor- Transistor- Logic), LVDS (Low Voltage Differential Signaling), optical or any mix of these.

Each Serial WireRing has one master. The master outputs a data stream that also includes the clock. The data stream flows from master to slave 0, then from slave to slave, in the end back to the master. Each slave delays the data stream by 1 bit. This is needed for signal re-conditioning, IFS detection and other internal processing. All data is sent with the least significant bit (LSB) first.

> **Requirement**
>
> A Serial WireRing slave shall re-condition the data stream. Voltage levels shall be restored. Jitter shall be reduced to the specified limits. To do so, the slave may delay the data stream by 1 bit time $T_{Bit}$, plus the analog delays of its input and output circuitry, < 60 % * $T_{Bit}$.

In Fig. 1 the communication system is designated in its entirety with reference sign 1. The master module is designated with reference sign 2, the slave modules are designated with reference sign 3. The communication medium is designated with reference sign 4. Each of the communication modules 2, 3 is provided with input/output storage means, for example an I/O shift register, comprising at least 8 bits of size. The I/O shift register is designated with reference sign 5. The I/O shift registers 5 have a size of approximately 8, 16, 32 or 64 bits or even larger or any other size deviating therefrom. Furthermore, each of the communication modules 2, 3 comprises further storage means which are designated with reference sign 6 and which are smaller in storage capacity than the I/O shift registers 5. In particular, it is suggested that the further storage means 6 of each of the communication modules 2, 3 comprise a shift register, preferably of 1 bit size. Of course, the further shift register 6 can have any other size smaller than the I/O shift registers 5, too. It can be clearly seen in Fig. 1 that the further shift registers 6 are located right within the daisy chain ring topology of the communication medium 4. Normally, data frames, which are merely passed along the daisy chain from module 2, 3 to module 2, 3 only pass through the further shift register 6 causing only a very small latency, for example of 1 bit (with a 1 bit shift register 6) or of 2 bits (with a 2 bit shift register 6). Only if the arriving data frame is addressed to the slave module 3, the data frame or the data contained therein, respectively, is forwarded to the I/O register 5 for further processing in the slave module 3.

This topology often provokes concerns about availability: "What happens if a slave gets defective? Then the whole bus won't work anymore!" Yes, no doubt, this is true. But if a slave is defective, it is very likely that the whole system will no longer work, no matter of the bus. On the contrary, from the functional safety's perspective, the immediate detection of a defective device is an important advantage. If fail-safe operation is required nevertheless, this is possible as described in section 3.3.

The master clocks the whole ring. Each slave synchronizes on the master's clock with a PLL for clock recovery (with VCO or oversampling). This eliminates separate clock lines for the slaves and all associated skew problems. The master initiates each transfer. There is no bus arbitration. There are 1 ... 16 slaves. A high performance microcontroller usually has more than one Serial WireRing master module to connect more than 16 slaves in total.

> **Requirement**
>
> A Serial WireRing master shall support up to 16 slaves.

The last slave sends its data back to the master, closing the ring. By checking this data, the master assures that the ring is locked and that everything is fine. The master uses its receiver to check whether its current frame was disturbed when transferring through the ring. In this case the failed frame can be retried automatically without software intervention.

Thanks to MFM coding, the polarity of the data stream doesn't matter. Inverters, line transceivers and galvanic isolators may be inserted as needed, as long as all timing requirements are met. When using LVDS, the two wires may be interchanged to optimize the layout of the PCB.

### 2.4 Multi-Master Configuration

SWR has only one master. However, all devices are connected to each other in the same way within the ring. So any device can play the role of the bus master. On a high protocol level, the current master can grant the master role to a slave and reset the bus. After this reset this slave takes the master role and initiates the bus. This may be useful in cases where the master and slave roles have to change, but not too often, e.g. between initialization and operation. E.g. the microcontroller as the master initializes an FPGA for video processing. Then the FPGA takes over the master role and supplies the pre-processed video data to the microcontroller that plays the slave role.

With most other busses, like SPI, such a change is not possible because the master is hard wired: only the master presents the chip selects and the clock.

Of course the master role can only be taken by slaves that also provide an SWR master module, e.g. microcontrollers or FPGAs.

**2.5 Modes**

Usually Serial WireRing works in Ring Mode (that's where its name comes from and what is described in section 2.3).

For some special applications, Serial WireRing can also be used in Link Mode. Link Mode sacrifices the connection from the last slave to the master. The ring is no longer a ring. There is only a link left from master to the slaves - that's where the name comes from. In Link Mode:

● The master cannot read-back and check any frame. Bit errors are not detected. So they cannot be counted and evaluated. In general the master has no indication about the health of the bus.
● Since the master cannot detect a failed frame, no automatic retransmission can be issued. A failed frame is lost without notice.
● The master cannot check whether the bus is locked, i.e. all PLLs have locked. At start-up the master simply waits a configurable time and then assumes that all PLLs have locked.
● Unicast Data Frames (section 2.9.1) are not allowed. Multicast Data Frames should be used instead. This is no real constraint: answers from slave to master are not transferred and the toggle-bit is useless without read-back by the master.
● Multicast Data Frames (section 2.9.2) are recommended. CRC may be used to ensure data integrity.
● Interrupt Frames (section 2.9.3) are still sent by the master. So each slave can determine its address. This is needed for reception of the Multicast Data Frame. But the slave cannot issue an interrupt.

Because it sacrifices all the advantages of the ring topology, Link Mode should be used with great care. Nevertheless, for certain use-cases Link Mode is reasonable:

● If there is already a (low speed) Serial WireRing for control and status and a slave needs to receive a very high speed data stream that would overload the control ring.
● If there is already a (low speed) Serial WireRing for control and status and a slave wants to send a very high speed data stream to the  master on its own request. In this case a second Serial WireRing working in Link Mode from the slave to the master can be used with the slave being the master of this link.
● High speed slave-to-slave communication, bypassing the master and unloading the (low speed) control and status ring.

> **Requirement**
>
> A Serial WireRing master shall support both Ring Mode and Link Mode. The mode is selected by configuration bit MA_LINK before the bus starts-up. When the bus is running, the configuration bit shall still be readable, but locked for change. The configuration flip-flop shall be protected against bit-flips, e.g. by triple-voting.

If it is clear that a master module will always work in Link Mode and will always drive only one or few slaves, it doesn't make sense to implement all features as described in this document. This is especially true if the master module has to be implemented into the slave. The slave's technology is optimized for analog or power performance, but not necessarily for logic. So the complete master module may occupy a significant amount of silicon area, causing high cost.

| Requirement |
| --- |
| A Serial WireRing Reduced Master may differ from the regular master: |
| • Support for only one or few slaves – reduced register set and DMA channels.<br>• No Ring Mode, only Link Mode supported – no read-back logic, no compare logic, no DLL, no clock-data-separator, no processing of received data.<br>• No automatic re-transmission of frames.<br>• Different register structure, optimized for a certain use-case.<br>• No software interface at all, dedicated hardware for a certain use-case.<br>• Not all of the allowed baud rates supported.<br>• Fixed data field length. |
| The Reduced Master is intended for implementation into ASICs, not into microcontrollers. |

## 2.6 Addressing

A Serial WireRing slave has no fixed built-in address, e.g. like $I^2C$. The address of each slave is simply its position in the ring: the first slave has address 0, the second slave has address 1, and so on up to 15. Each slave learns its address with the first Interrupt Frame. See section 2.9.3. The master addresses a slave with a 4 bit address that is part of the frame.

## 2.7 MFM Coding

Serial WireRing transmits clock and data on the same wire. By this it avoids any skew between clock and data and keeps the number of I/O pins as low as possible.

MFM coding (see Fig. 2) is used because it is the best compromise between bandwidth utilization, jitter tolerance, simplicity, EMI and power consumption. Polarity doesn't matter, only edges are relevant. This allows for inserting inverters or interchanging the LVDS wires.

MFM coding rules:

● An edge in the bit cell center = logic 1
● No edge in the bit cell center = logic 0
(may be there's an edge at a bit cell boundary instead)
● Distance between 2 edges = 1 or 1.5 or 2 $T_{Bit}$,
edges between bit cells are inserted as needed to fulfill this.
● Exception: Interframe Symbol IFS with 3 $T_{Bit}$ (see below)

A detailed description of MFM can be found on many places, i.e. in online encyclopedia Wikipedia.

| Requirement |
| --- |
| Each Serial WireRing device shall support MFM coding. |

## 2.7.1 Interframe Symbol IFS

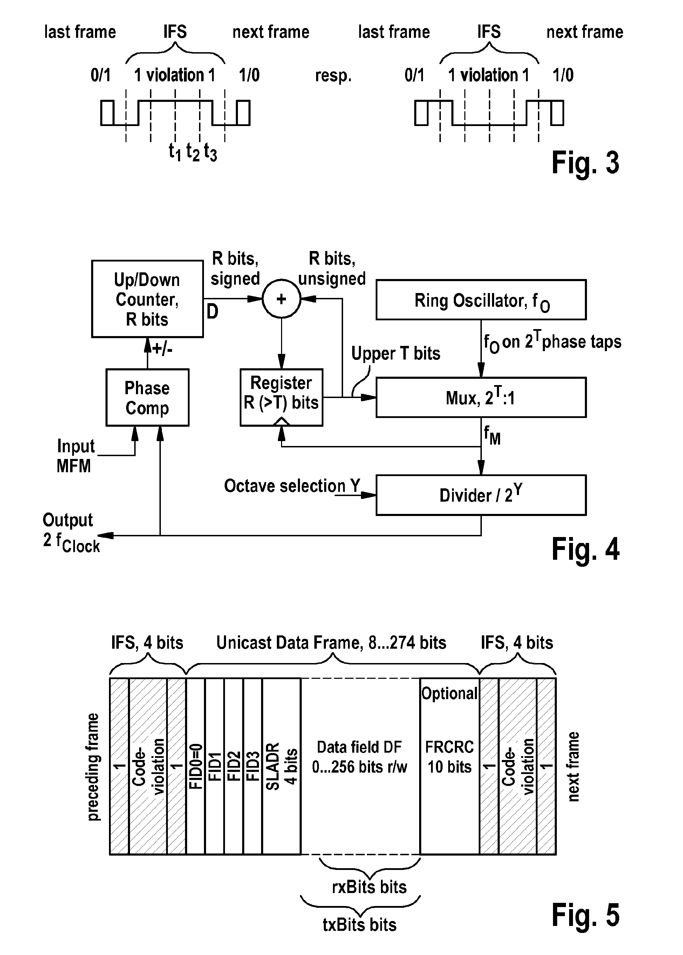

The receiver needs to distinguish clock and data edges. This is accomplished with the IFS, that contain a defined code violation (see Fig. 3). The IFS is also used to detect the end of a frame.

The code violation (in relation to the coded data) happens at $t_1$, where an edge should occur. But the receiver can detect this not before $t_2$, which is the latest time where an edge should have occurred.

For initial synchronization, the receiver acknowledges the edges of the 3 $T_{Bit}$ pulse to reside in the bit cell center. Thus, clock/ data edge assignment is possible.

A slave can forward the IFS with 1 bit delay without a problem (see Fig. 3, $t_1$ $t_2$ $t_3$):

● The first 2 bits received by the slave are a normal 1 and a normal 0. The slave outputs the last bit of the preceding frame and the starting 1 of the IFS.

● While the slave outputs the first 0 of the IFS, its receiver detects at $t_2$ the code violation, because a new edge should have arrived at $t_1$ for a 0 or at $t_2$ for a one. Hence, an IFS is detected by the receiver and the receiver can now prepare the sender to not send an edge at $t_3$.

● The slave receives the last bit of the IFS, 1, and sends the 2nd 0 without the preceding edge.

● The slave receives the first bit of the next frame and sends the finishing 1 of the IFS.

> **Requirement**
>
> Each Serial WireRing device shall support the Interframe Symbol IFS with the following MFM code:
>
> - 1 (edge in center of bit cell)
>
> - no edge for 3 bit times (this is the code violation used for synchronization)
>
> - 1 (edge in center of bit cell)
>
> The IFS shall be used for clock/data separator synchronization and for end-of-frame detection.

### 2.8 Clock

The clock frequency $f_{clock}$ can freely be chosen as needed by the application. This is to conform to the general rule "as fast as needed, as slow as possible". The inverse of the clock frequency is the bit time $T_{Bit} = 1 / f_{Clock}$.

A minimum clock frequency of 1 MHz is defined to limit the capacity of the clock dividers. Clock frequencies below 1 MHz do not make sense. A slave has to lock on any frequency from 1 MHz up to its maximum clock frequency. During start-up the master sends a continuous stream of Interframe Symbols. In fact this is a PWM signal with $f_{Clock} / 4$ and 25 % duty cycle. The slave can use this signal to measure the clock frequency directly and prepare its PLL to lock fast.

The highest clock frequency depends on system requirements, device technology and design effort. The slowest device limits the clock frequency of the whole ring. This slowest device usually is a slave. It may be necessary to group slow slaves into a ring with low speed and demanding devices into another ring with high speed.

> **Requirement**
>
> The Serial WireRing master shall provide a clock frequency of at least 1 MHz. This clock frequency shall not drift more than $\pm$ 2 % during operation.

Of course it is a good idea to equip the master with a rich set of clock frequencies. However, a "fractional divider" cannot be used for this, because it introduces too much phase jitter. A simple conventional 1 / N divider is recommended.

> **Requirement**
>
> A Serial WireRing slave shall lock on any clock frequency from 1 MHz up to its specified maximum without any preceding configuration. Maximum drift, drift rate and jitter shall be accepted. The maximum time to lock under these conditions shall be specified in the slave's data sheet.

There are many options to implement this continuous frequency range. The simplest way is to implement a digital or analog VCO with at least 1 octave tuning range, followed by a chain of 1 / 2 dividers.

> **Requirement**
>
> The Serial WireRing master shall keep the clock stable. Clock frequency shall not drift faster than $\pm 1$ %/s, within the specified limits.

> **Requirement**
>
> A Serial WireRing slave shall accept a received data stream frequency drift of at least $\pm 1$ %/s with the specified bit error rate.

This allows the PLL of a slave to be slow and stable.

The jitter budget of each bit, allowed by the MFM coding, is $\pm 25$ % $T_{Bit}$:

● 12.5 % are reserved for the interconnect to make PCB layout easy and allow simple line drivers and receivers.
● 6.25 % are reserved for each the receiver and the transmitter to allow over- or multi-phase-sampling with a fixed clock instead of a real PLL.
Suppliers are encouraged to go below this limit and to leave more budget for interconnect.

> **Requirement**
>
> The transmitter of a Serial WireRing device shall transmit the data stream with $< \pm 6.25$ % $T_{Bit}$ peak jitter (6 sigma) of each edge relative to the ideal data stream with least root mean square deviation to the actual data stream.

> **Requirement**
>
> A Serial WireRing device shall accept a data stream with up to 18.75 % $T_{Bit}$ peak (6 sigma) jitter of each edge relative to the ideal data stream with least root mean square deviation to the actual data stream with the specified bit error rate.

An FM (Frequency Modulation) of the clock frequency to "improve" electromagnetic emission is not intended for Serial WireRing. On the one hand this would deteriorate the clocks of the slaves. On the other hand FM does not decrease the radiated power at all. It only spreads this power over a wider frequency range. For modern modulation techniques like OFDM this kind of interference is worse than a single carrier. Because this fact is more and more recognized, EMI measurement rules are being changed to specify wider receiver bandwidth. Within this new specification, FM will no longer help to pass an EMI assessment.

> **Requirement**
>
> In Ring Mode, the Serial WireRing master shall lock on its own data stream. It shall compensate for any, also non-integer delay. The maximum time to lock shall be specified in the master's data sheet.

Non- integer delay means, that a delay of e.g. 13.72 $T_{Bit}$ must be lockable.

> **Requirement**
>
> The Serial WireRing master shall track the received data stream over the full delay range 0 ... 64 $T_{Bit}$ without unlocking. It shall accept a delay drift up to $\pm$ 10 $T_{Bit}$ /s.

### 2.8.1 PLL

Each slave needs a PLL and a clock-data-separator to recover the clock. Depending on the maximum supported bus clock frequency, there are very different design options. This is why no PLL design is specified in this document. The PLL only has to fulfill the requirements on lock, jitter, frequency tolerance and drift.

The need for a PLL usually provokes concerns because of the effort. The following example is not for implementation, it is only to show how easy a PLL may be realized.

For low frequency, up to some 50 MHz, the PLL may be full digitally, i.e. have no analog phase comparator, loop filter or VCO. Instead it tracks the input signal with over- or multi-phase-sampling. This design omits any analog components, providing low silicon area consumption, good scalability to smaller structures and low design risk. A simple design example of such a full digital PLL is shown in Fig. 4. Note that no multiple of the output frequency occurs in this circuit. Thus a relatively slow semiconductor process can be used. This is important because the slave's semiconductor process is often mixed signal and not optimized for high performance digital circuits.

The ring oscillator runs freely with $f_O$. $f_O$ resides roughly (may be some 10 %) around two times the highest bus frequency that the slave supports. The ring oscillator has $2^T$ taps. The more taps the finer is the phase resolution and the lower is the phase jitter of the output. A multiplexer selects 1 of the taps. The selected tap is switched with each multiplexer output period. The register forms a phase accumulator with R bits. Effectively the periodic phase change forms a frequency change:

$$f_O = f_M \left(1 + D / 2^R\right)$$

or

$$f_M = f_O / \left(1 + D / 2^R\right)$$

Note that D can be positive or negative, so $F_M$ may be above or below $f_O$. Frequency resolution is determined by phase accumulator resolution, R bits. E.g. R = 16 bits yield a resolution of about 15 ppm per D step.

For very high frequency, the PLL may use an analog or digital phase comparator, loop filter and oscillator. This PLL will look like the ones used in PCIe, SATA, etc.

Usually the PLL oscillator will oscillate on the slave's maximum supported frequency. All lower frequencies are generated very simply with a chain of flip-flops, each dividing by 2. During the lock process, the slave first selects the right octave (with Y in Fig. 4) and then fine-tunes the frequency.

**2.9 Frames**

The Serial WireRing is never quiescent. The master is always sending one of 3 kinds of frames:

- A Unicast Data Frame carries data & instructions from master to one slave and vice versa, fully duplex.
- A Multicast Data Frame carries data & instruction from master to one or multiple slaves, but not vice versa, i.e. the slave(s) cannot answer.
- An Interrupt Frame gives each slave the opportunity to assert an interrupt to the master and to get or check its address.

This table gives an overview:

| Name | Unicast Data Frame | Multicast Data Frame | Interrupt Frame |
|---|---|---|---|
| Data from master to slave | to 1 slave | to 1 or more slaves | - |
| Data from slave to master | possible | never | - |
| Number of data bits | 0...256 | 0...256 | - |
| Read-Back | always | never | in Ring Mode |
| 2 successive frames of the same type | no | possible | when nothing else is to be sent |
| Link Mode | not allowed | supported | Slave address check supported. Interrupts not supported. |
| CRC | configurable | configurable | always |
| Toggle bit | changed | unchanged | - |
| Interrupt counter | - | - | may change |
| Length | 8 + number of data bits + 10 if CRC | 9 + N_SL + number data bits + 10 if CRC | 23 + N_SL |

Each two frames are separated by an "Inter-Frame Symbol", IFS (Fig. 3).

> **Requirement**
>
> In the locked state, the Serial WireRing master shall never stop sending frames.

> **Requirement**
>
> In the locked state, any two succeeding Serial WireRing frames shall be separated by exactly one IFS.

The master processes all frame on its own, with little software intervention. This allows very high throughput. The Data Frames reside in RAM, organized in queues. A queue is a linked list of WiriDataFrame structures. The master manages a Multicast Data Frame queue for all slaves together plus 2 Unicast Data Frame queues for each slave, one for the regular flow, and one for interrupt processing. The Serial WireRing master autonomously walks through all these queues and schedules the next frame to be processed. If the master reaches the end of a queue, it automatically stops sending frames from this queue until software prolongates the queue.

> **Requirement**
>
> To determine the next Unicast Data Frame to send, the master scans all active queues of all slaves, unicast and multicast, regular and interrupt. If a queue's current command is still being processed, this queue is skipped. The master services the queue with the frame of highest priority. If more than 1 queue's current frame has the same highest priority, the first one (starting behind the last processed queue) is processed.

All queues are scheduled in the same way. So it is a good idea to give all frames in the interrupt queues a higher priority compared to the regular queues.

> **Requirement**
>
> Before sending the next Data Frame, the master shall check whether an Interrupt Frame has to be inserted first to comply with the maximum interrupt latency N_LAT. If so, the master sends an Interrupt Frame before the scheduled Unicast Data Frame.

> **Requirement**
>
> If no Unicast or Multicast Data Frame is to be sent, the Serial WireRing master shall send an Interrupt Frame.

### 2.9.1 Unicast Data Frame

The Unicast Data Frame moves full duplex data and commands from the master to the addressed slave and simultaneously back from the addressed slave to the master.

The master reads-back and checks this frame. Before the frame was approved, no new frame is sent to the same slave, because the current frame may have to be re-transmitted. This may cause some delay.

Because the master must read-back a Unicast Data Frame, Unicast Data Frames are not allowed in Link Mode.

**Requirement**

A Serial WireRing device shall support the Unicast Data Frame structure (see Fig. 5) as follows:

| FID0 | Frame ID bit 0 = 0: indicates a Unicast Data Frame. |
|---|---|
| FID1 | Frame ID bit 1: toggle bit.<br><br>Before the master sends a <u>new</u> Unicast Data Frame to the slave, it toggles this bit. If, after an error, the master repeats the <u>same</u> Unicast Data Frame, this bit stays the same. By these means the slave can distinguish, whether the master has repeated the last Unicast Data Frame or has sent a new one, even if the data field DF is the same.<br><br>The master manages a separate toggle bit for each slave in TOGL.<br><br>When entering the locked state, each slave sets this bit to 0 and the master initializes TOGL with 0. |
| FID2, FID3 | Frame ID bits 2 & 3: reserved.<br>Until defined, the slave ignores these bits and the master sets them to 0. |
| SLADR | Slave address. 4 bits. Least significant bit first. The slave compares this address to the value it has learned from the Interrupt Frames. |
| DF | The data field (DF) is the "payload" of the Unicast Data Frame, 0 ... 256 bits of read and/or write data for instruction and/or data. The least significant bit of the least significant byte is transmitted first ("little endian").<br><br>DF contains 0...256 bits. The slave may replace any number of these bits with an answer to the master, starting at an arbitrary bit position, but always up to the end of DF. So, to process a Unicast Data Frame completely, the master needs to know 3 values:<br>　　　　DF data (pointed to by WIRI_TXR0...15 resp. WIRI_TXI0...15)<br>　　　　　DF length (txBits).<br>　　　　　The length of the slave's answer (rxBits).<br><br>This data is provided by the software in the WiriDataFrame structure for each individual Unicast Data Frame. So it may change dynamically, depending on the command structure.<br><br>If the slave injects its answer into DF, the master cannot compare this part of DF with the data it has sent. In this case CRC is |

| | | |
|---|---|---|
| | | recommended for high safety applications. |
| | FRCRC | Optional 10-bit CRC over the complete frame, from FID0 to the end of DF. Least significant CRC-bit first. Only present if MA_CRC is set.<br><br>If the slave injects an answer into the Unicast Data Frame, it has to re-calculate the CRC. On reception the master checks the CRC and this way assures:<br>- the right slave was addressed.<br>- this slave received correct data.<br>- data from this slave to the master is correct. |

The not-addressed slaves pass through the Unicast Data Frame. So they do not need to know where DF ends. The master and the addressed slave both know txBits and rxBits. So it is not necessary that a Unicast Data Frame contains explicit information about this length. If CRC is used, it covers all bits of the frame, including the address.

> **Requirement**
> A Serial WireRing slave may replace any number of bits of the data field, starting at an arbitrary position and up to the end of the data field, with a message to the master. The number of replaced bits may be fixed or depend on the master's message to the slave. It shall be documented in the slave's data sheet so that the master knows about it. The number may be 0 (no answer) up to the full length of data field.

With 256 bits for DF the efficiency of the Serial WireRing is 256 / 268 = 95 % without CRC and 256 / 278 = 92 % with CRC (but including the IFS). More bits in the data field don't help much, but increase latency for interrupts significantly. This is the reason why DF is limited to 256 bits.

2.9.1.1 Unicast Data Frame Processing by the Master

The data to be sent to a slave and the data received from it also reside in RAM. The Serial WireRing master reads/writes this data in a DMA-like manner. Ring buffers and FIFOs can be arranged to interface to the software in a non-time-critical way.

A Unicast Data Frame can be repeated up to 1023 times (= 1024 transmissions in sum) automatically without any software intervention. The data may be different or the same for each repetition. The number of repetitions is individually defined for each Unicast Data Frame with repeat.

If the master detects an error during read-back of a Unicast Data Frame, it can automatically re-send this Unicast Data Frame at the next occasion. This is called a retry. The allowed number of retries (0...3) is individually defined for each Unicast Data Frame with maxRetries. If no retry is allowed or the maximum number of retries is exceeded, the master sets the RTR_IP bit and stops servicing the associated slave (regular + interrupt queue, but not multicast queue).

**Requirement**

The master shall manage 2 separate Unicast Data Frame queues for each slave. Each queue is a linked list of WiriDataFrame structures in RAM. Each queue is processed one by one, the next frame is not sent before the current one was read-back and checked successfully.

- The regular queue: this queue is always processed. The current queue member is pointed to by WIRI_FRR0...15.
- The interrupt queue: after an interrupt from the slave and if it has highest priority of all queues, the current element from this queue is processed once (burstMode = 0) or with all repetitions, if any (burstMode = 1). The current queue member is pointed to by WIRI_FRI0...15.

It takes some time until the master has read-back and checked the Unicast Data Frame. During this time the master sends no new Unicast Data Frame to the same slave. Instead, the master sends another Unicast Data Frame to another slave, a Multicast Data Frame or an Interrupt Frame.

**Requirement**

The Serial WireRing master shall process a Unicast Data Frame from a queue as follows:

1. If RTR_IP is set, WIRI_FRR0...15 resp. WIRI_FRI0...15 = 0 or WIRI_TXR0...15 resp. WIRI_TXI0...15 = 0, the master ignores the queue.
2. If this is the first try to send, the master toggles TOGL and sets RTR_CNT = maxRetries.
   If this is a retry, the master decrements RTR_CNT by 1 and does no change TOGL.
3. The master sets FID0 = 0 and FID1 = TOGL.
4. The master sets SLADR. The first slave has address 0, the last has address N_SL.
5. The master fills DF with data from WIRI_TXR0...15 resp. WIRI_TXI0...15.
6. If MA_CRC is set, the master calculates and adds FRCRC.
7. The master sends the Unicast Data Frame and reads it back:
   - all 4 FID bits must be unchanged.
   - SLADR must be unchanged.
   - the first (txBits − rxBits) of DF must be unchanged.
   - the last rxBits of DF are not checked.
   - the FRCRC, if present, must be correct.
8. If there is no error in the received Unicast Data Frame, the master proceeds to the next.
9. If there is any error in the received Unicast Data Frame and RTR_CNT = 0, the master sets RTR_IP. This prevents any further processing of this queue.
10. Otherwise the master will re-schedule this failed Unicast Data Frame and send it again on next occasion.

2.9.1.2 <u>Unicast Data Frame Processing by the Slave</u>

**Requirement**
A Serial WireRing slave shall process a Unicast Data Frame as follows:

1. The slave receives and re-transmits (with 1 $T_{Bit}$ delay) the 4 frame ID bits:
   If FID0 = 1 → This is a Multicast or Interrupt Frame.
2. If the slave didn't receive an Interrupt Frame yet and thus could not store its address, it ignores the Unicast Data Frame. Done.
3. The slave receives SLADR and compares it to its own address learned from Interrupt Frames.
4. If not equal, the slave is not addressed and passes through all further bits up to the next IFS. Done.
5. If equal, the slave is addressed.
   If the toggle bit FID1 is different from the slave's internal copy, then this is a re-send Unicast Data Frame that the slave has already processed. The slave passes through all bits up to the answer, then inserts the same answer (plus CRC, if enabled) again that it has already sent to the master last time. Done.
6. The slave receives DF and may inject its answer data into DF.
7. If now the IFS occurs, this means that no CRC is provided. Done.

8. No IFS yet means that a CRC is to come. The slave compares the received FRCRC bit by bit to the CRC it has calculated over the received data.
Simultaneously the slave sends the CRC it has calculated over transmitted data.
9. If a CRC bit does not match, the slave from this point on inverts all transmitted CRC bits up to the end of the frame. Done.
10. The slave checks for correct IFS after the last received CRC bit. If not, the slave waits for the next IFS. Done.
11. The slave sets its copy of the toggle bit = FID1 and processes the Unicast Data Frame.

If an IFS occurs unexpectedly, the slave re-starts searching for the next IFS.

If the slave's PLL gets out of lock at any time, the whole Serial WireRing is re-started, see section 2.15.

**2.9.2 Multicast Data Frame**

The Multicast Data Frame moves data and commands from the master to one or more slaves simultaneously with a single frame. No answer from any slave to the master is supported. The toggle bit is not supported either. So the slaves must be prepared to miss a Multicast Data Frame. However, data integrity can be assured with CRC. The master does not read-back a Multicast Data Frame. In contrast to the Unicast Data Frame, this allows to send one Multicast Data Frame after another, without any other frame in between. Because a Multicast Data Frame is not read-back by the master, it can be used in Link Mode, while Unicast Data Frames are allowed only in Ring Mode.

Addressing is done with a separate bit for each slave. The Multicast Data Frame is not changed at all by any slave. Each slave passes through the Multicast Data Frame as is.

A Multicast Data Frame is excellent to ...

● transport large amounts of data (e.g. ADC sample values) without the delay caused by the master's read-back.
● timely synchronize one or more slaves, e.g. by sending a kind of "set local clock" command. Since the delay between the slaves is known to the master, the master afterwards can instruct the slaves to do things simultaneously, e.g. ADC sampling or output switching.
● drive multiple slaves with minimal overhead. E.g. a single Multicast Data Frame with 48 bit DF may drive 3 power-stage-ASICs nearly simultaneously, where the first power-stage is configured to use bits 0...15, the second to use bits 16...31 and the third to use bits 32...47.

| | |
|---|---|
| **Requirement** A Serial WireRing device shall support the Multicast Data Frame structure (see Fig. 6) as follows: | |
| FID0, FID1 | FID0 = 1, FID1 = 0: These values describe a Multicast Data Frame. |
| FID2, FID3 | Frame ID bits 2 & 3: reserved. Until defined, the slave ignores these bits and the master sets them to 0. |
| N_SL | Copy of N_SL. 4 bits. Least significant bit first. Used by the slave to know how many S bits follow. |
| $S_0 ... S_{N\_SL}$ | Slaves address bits. Can be used in any combination. N_SL+1 bits: If $S_0 = 1$, slave 0 is addressed. If $S_1 = 1$, slave 1 is addressed. ... If $S_{N\_SL} = 1$, slave N_SL is addressed. Each slave uses its stored address to watch "its own" bit. |
| DF | Data field. Same as for Unicast Data Frame, but no answer injected by the slave. |
| FRCRC | Optional CRC. Same as for Unicast Data Frame. |

2.9.2.1 Standard Multicast Data Frames

For some Multicast Data Frames, standardization makes sense. Manufacturers are advised to stick to this standard:

**Requirement**

If applicable, a Serial WireRing slave shall support the following Multicast Data Frames:

| Command | DF length / bits | DF value | Description |
|---------|------------------|----------|-------------|
| Reset | 8 | 0x03 | The slave is resetted in the same way as if Serial WireRing had locked out. So, after this command the slave waits for the next Interrupt Frame to determine its address. |
| Disable | 8 | 0x06 | Put the slave into a safe state, e.g. switch off a power stage. |
| Enable | 8 | 0x0A | Complement to "Disable": put the slave into operation again. |
| Reset Clock | 8 | 0xA0 | Reset the internal time base counter of the slave, if present. This counter is clocked with the bus clock. This counter is set to minus the slave's stored address. This compensates for the 1 bit delay from slave to slave. |

2.9.2.2 Multicast Data Frame Processing by the Master

The master processes the Multicast Data Frame mostly on its own, with little software intervention. This allows very high throughput. The Multicast Data Frames reside in RAM, organized in a single separate queue. This queue is scheduled together with all Unicast Data Frame queues.
The data to be sent to the slaves reside in RAM. The Serial WireRing master reads this data in a DMA like manner. Ring buffers and FIFOs can be arranged to interface to the software in a non-time-critical way.
A Multicast Data Frame can be repeated up to 1023 times (= 1024 transmissions in sum) automatically without any software intervention. The data may be different or the same for each repetition. The number of repetitions is individually defined for each Multicast Data Frame with repeat.

**Requirement**

The Serial WireRing master shall process a Multicast Data Frame as follows:
1. If WIRI_FRM = 0 or WIRI_TXM = 0, the master ignores the queue.
2. The master sets FID0 = 1 and FID1 = 0.
3. The master inserts N_SL.
4. The master sets the S bits of the targeted slaves.
5. The master fills DF with data from WIRI_TXM.
6. If MA_CRC is set, the master calculates and adds FRCRC.
7. The master sends the Multicast Data Frame.

2.9.2.3 Multicast Data Frame Processing by the Slave

> **Requirement**
>
> A Serial WireRing slave shall process a Multicast Data Frame as follows:
> 1. The slave checks if FID0 = 1 and FID1 = 0.
> 2. If the slave didn't receive an Interrupt Frame yet and thus could not store its address, it ignores the Multicast Data Frame. Done.
> 3. The slave receives N_SL.
> 4. The slave checks its own S-bit. If $S_x = 0$, the lave is not addressed. Done.
> 5. With help of N_SL, the slave waits for DF.
> 6. The slave reads DF.
> 7. If now IFS occurs, this means that no CRC is provided. Done.
> 8. No IFS means that a CRC is coming next. The slave compares the received FRCRC to the CRC it has calculated over the received data. If no match, the slave ignores the frame. Done.
> 9. The slave checks for correct IFS after the last received CRC bit. If not, the slave waits for the next IFS. Done.
> 10. The slave processes the Multicast Data Frame.
>
> The slave re-sends the Multicast Data Frame as is, without changing a single bit.
>
> If an IFS is received anywhere within the Multicast Data Frame unexpectedly, the slave simply restarts processing.
>
> If the slave's PLL gets out of lock at any time, the whole Serial WireRing is re-started, see section 2.15.

### 2.9.3 Interrupt Frame

An Interrupt Frame has 3 functions:

● It gives each slave the opportunity to assert an interrupt to the master.
● If nothing is to be sent, the master sends Interrupt Frames continuously to keep the ring alive and to supply all slaves with the clock.
● With the Interrupt Frame, each slave calculates its own address.

> **Requirement**
>
> After entering the locked state, the master shall send an Interrupt Frame before the first Data Frame.

The master sends an Interrupt Frame, if

● the master just has locked.
● no Data Frame is to be sent.
● sending the next Data Frame might take so long that N_LAT might be exceeded.

Because the Interrupt Frame is important for safe system function, the CRC is obligatory.

| Requirement | |
|---|---|
| A Serial WireRing device shall support the Interrupt Frame structure (see Fig. 7) as follows. Bits are listed in appearing order. | |
| FID0, FID1 | Frame ID bit 0 and 1: FID0 = 1, FID1 = 1 define an Interrupt Frame. |
| FID2, FID3 | Frame ID bits 2 & 3: reserved. Until defined, the slave ignores these bits and the master sets them to 0. |
| N_SL | Copy of N_SL. 4 bits. Least significant bit first. Used by the slave to know how many I bits follow. |
| SLADR | Slave address, 4 bits. Least significant bit first. Each slave stores this value as its own address, increments this value by 1 and sends the result to the next device. The master sends SLADR = 0. |
| $I_0 ... I_{N\_SL}$ | Interrupt bits. 1 bit for each slave: N_SL + 1 bits. The master sends each slave's INT_CNT. Each slave injects its current interrupt counter into $I_X$ where X is the slave's address. If a slave does not support interrupts, it does not change its $I_X$ bit. |

| FRCRC | Obligatory 10-bit CRC over the complete frame. Least significant CRC-bit first. Each slave re-calculates the CRC for the incremented address and the maybe changed $I_X$ bit. |
|---|---|

N_LAT must be high enough to allow at least 1 Data Frame between 2 Interrupt Frames:

- 23...38 bits for Interrupt Frame itself
- 4 bits IFS
- 8...290 bits for Data Frame
- 4 bits IFS

| Requirement |
|---|
| The master shall send an Interrupt Frame at least each **N_LAT** bus clock cycles. **N_LAT** = 0...0xFFFE, writable any time by software. Anyway the master schedules at least 1 Data Frame (if available) between 2 Interrupt Frames. |

So, a value below 290 may not be effective in all cases. Such low values are not advised anyway because this reduces throughput. On the other side, if N_ LAT is too high, it may take too much time until the master recognizes a slave's request.

> **Requirement**
>
> If **N_LAT** = 0xFFFF, the master shall not schedule Interrupt Frames. It sends an Interrupt Frame after synchronization before the first Data Frame, or if no Data Frame is to be sent.

If Multicast Data Frames are to be sent with highest data rate, it may happen that only 1 Interrupt Frame is sent at all - after synchronization. With Unicast Data Frames this cannot happen because there is always sometime between read-back and check of the current Unicast Data Frame and start of the next.

More about interrupts in section 2.14.

2.9.3.1 <u>Interrupt Frame Processing by the Master</u>

> **Requirement**
>
> If **N_LAT** $\neq$ 0xFFFF, the master shall check for an Interrupt Frame before sending the next scheduled Data Frame: if
>
> (bits since start of last Interrupt Frame)
> + (length of next Uni-/Multicast Data Frame)
> + 4
> > **N_LAT**
>
> then the master shall send an Interrupt Frame first.

> **Requirement**
>
> The Serial WireRing master shall process an Interrupt Frame as follows:
> 1. The master sets FID0 = 1 and FID1 = 1.
> 2. The master sets N_SL.
> 3. The master sets SLADR = 0.
> 4. The master sets each I bit to INT_CNT of the associated slave.
> 5. The master calculates FRCRC.
> 6. The master sends the Interrupt Frame and reads it back.
>    The master checks the received Interrupt Frame:
>    - all 4 FID bits must be unchanged.
>    - SLADR must be $-(N\_SL + 1)$ modulo 16.
>    - FRCRC must be correct.
> 7. In case of an error, the master ignores the received Interrupt Frame and generates a new one immediately. If this happens for more than MAX_IRTR times consecutively, the master issues a reset of the bus.
> 8. If no error, the master compares each received I bit to its local copy INT_CNT. If there is a change, the master updates its local copy and sets SL_INT of the associated slave.

2.9.3.2 <u>Interrupt Frame Processing by the Slave</u>

> **Requirement**
>
> A Serial WireRing slave shall process an Interrupt Frame as follows:
> 1. The slave receives and sends (with 1 $T_{Bit}$ delay) the frame ID bits.
>    If FID0 and FID1 are not both 1, then this is another frame...
> 2. The slave receives N_SL.
> 3. The slave receives SLADR, adds 1 on the fly,
>    re-sends the incremented address on the fly,
>    and calculates new FRCRC for the decremented address.
> 4. The slave copies its own interrupt counter into the appropriate $I_X$ bit and
>    calculates new FRCRC accordingly.
> 5. The slave compares the received FRCRC bit by bit to the CRC it has
>    calculated over the received data.
>    Simultaneously the slave sends the CRC it has calculated over
>    transmitted data.
> 6. If a CRC bit does not match, the slave from this point on inverts all
>    transmitted CRC bits up to the end of the frame. Done.
> 7. The slave checks for correct IFS after the last received CRC bit. If not,
>    the slave waits for the next IFS. Done.
> 8. The slave stores the received SLADR as its own address and enables
>    reception of Data Frames.
>
> If an IFS is received anywhere within the Interrupt Frame unexpectedly,
>
> the slave simply restarts at step 1.
>
> If the slave's PLL gets out of lock at any time, the whole Serial WireRing is
>
> re-started, see section 2.15.

### 2.10 Functional Safety

Serial WireRing was developed to provide a high safety integrity level with low system overhead and easy verification, providing fast and cost-effective development.

- ● The ring topology is advantageous: the master receives what it has sent and checks for errors. This works for the frame ID bits, address and data from master to slave. Data from slave to master cannot be checked. This is done by hardware, no software is needed.
- ● The MFM coding is advantageous: stuck-at errors of more than 3 $T_{Bit}$ are detected by the MFM decoder. For details see section 2.7.1.
- ● Glitches that overcome the anti-glitch filter will cause an MFM coding violation, also detected by the MFM decoder.
- ● In spite of all these built- in- by- design safety features, a frame can optionally be protected by a 10 bit CRC. This CRC alone fulfills ISO 26262 ASIL- D components class 1 requirements. The required raw bit error probability $p_{raw}$ can be measured easily. All these measures provide a rock- solid rationale for ASIL- D accordance.

If a slave gets unlocked, the whole ring will unlock. If a slave has a receiver or transmitter problem or loses power, the master detects this via read-back. A slave may execute self tests and, in case of fatal failure, simply switch off its WireRing transmitter. This guarantees that the master will detect the failure and the system can enter a safe state.

These mechanisms ensure that each Unicast Data Frame is only processed by the addressed slave:

> **Requirement**
>
> Each slave shall triple check a Data Frame before acting on it:
> 1. An Interrupt Frame to learn the own address must have been received.
> 2. The address must match.
> 3. The CRC (if provided) must be correct.
> 4. The end of the frame must be followed by IFS.

> **Requirement**
>
> Each slave shall double check an Interrupt frame before acting on it:
> 1. The CRC (always provided) must be correct.
> 2. The end of the frame must be followed by IFS.

A Unicast Frame cannot get lost if retransmission is set. If an error occurs, the Unicast Data Frame can be re-transmitted automatically. This feature is configurable for each frame individually.

> **Requirement**
>
> On reception of an Interrupt Frame, a slave shall check the plausibility of the address:
> • If the address was not yet stored, the slave shall simply store it.
> • If the address is already stored, the slave shall compare it. If there is a difference, the slave shall correct the stored address and take measures:
>   - at least set a status flag for the master.
>   - lock critical functions, e.g. power stages.
>   - switch off the transmitter, unlocking the bus, if the error persists.

The supplier is encouraged to implement an address learning algorithm that is reliable and fits to the intended application. There are many options for this.
This way Serial WireRing offers a high reliability level for the physical (0) and data link (1) layer. It is easy to adapt even more safety measures at higher protocol stack levels, e.g. cyclic read-back of critical registers.

### 2.10.1 Choosing the Right CRC

> **Requirement**
>
> Each Serial WireRing device shall support CRC.
>
> Interrupt frames are always protected by this CRC.
>
> In its global configuration register, the master shall provide MA_CRC bit to switch on/off CRC for all Data Frames. This bit shall only be writable before the bus is enabled. When the bus is running, this bit can only be read. This bit shall be protected against bit-flip, e.g. by use of triple-voting.

Switching off the CRC may be useful in systems with many short frames, when safety is not so critical or is addressed by alternative means. In this case the 10 bit overhead of the CRC is omitted. Compared to Data Frames, interrupt frames are rare. Furthermore, interrupt frames are always critical. This is why interrupt frames are always protected by the CRC.

> **Requirement**
>
> When CRC is enabled, it makes up the last bits of a frame, before the next IFS. The addressed slave shall compare its own calculated CRC to the received CRC bit by bit. If a bit differs, the slave shall invert the CRC bit that is just sent and all succeeding bits.

Thanks to the 1 $T_{Bit}$ delay, there is time for the slave to invert at least 1 bit. This way it is ensured that the next slave receives a massively disturbed CRC and will not process the frame. Even if the error occurs only at the very last bit, it is very unlikely that a second error hits exactly this bit. The master not only reads-back the wrong CRC, but also the wrong data bit. Thus the master will safely detect the error.

The CRC is important for data transfer from slave to master and for link mode. So the requirements for the CRC base on ISO26262 ASIL-D without taking any benefit from the inherent safety features of Serial WireRing:

- Ensure < $10^{-10}$ undetected errors per hour at any speed and for any frame length. This is the most demanding requirement, described in detail in the rest of this section.
- Detect > 99 % of all possible bit combinations as erroneous (white noise model). Any CRC with $\geq$ 7 bits does. So CRC must be at least 7 bits long.
- Cover 8...290 bits. If the CRC is capable of detecting errors in the longest frame with a certain hamming distance, it will do so for any shorter frame, too.
- Be as short as possible. The minimum CRC length is calculated in the following description.

Burst errors are no issue. A constant logic level violates the MFM coding. Anyway, a good CRC detects all burst errors up to its length.

The probability $p_{res}$ that a CRC with hamming distance HD cannot detect an error within a frame of n bits where each bit has error probability $p_{raw}$ follows the binomial density function and is:

$$p_{res} \leq \sum_{i=HD}^{\infty} \left[ \binom{n}{i} p_{raw}^{\ i} \left(1 - p_{raw}\right)^{n-i} \right] \approx \binom{n}{HD} p_{raw}^{\ HD} \left(1 - p_{raw}\right)^{n-HD} \quad for \ n \cdot p_{raw} << 1$$

Please note the "$\leq$" instead of "=": this is a worst case approximation, assuming that the CRC detects none of all errors of HD bits and more. However, a real world CRC detects a lot of those errors, providing a $p_{res}$ below the right hand expression. As described in Koopman, Philip and Chakravarty, Tridib: Cyclic Redundancy Code (CRC) Polynomial Selection For Embedded Networks, Carnegie Mellon University Pittsburgh, PA, USA, Preprint: The International Conference on Dependable Systems and Networks, DSN-2004, a "good" CRC detects many errors with HD bits (which from the remaining possibly undetected ones are most likely). For sake of simplicity, the following calculations assume a "bad" CRC, detecting no error with HD or more bits. So the results are conservative, providing some safety margin.

If all frames have the same length n and the bit rate is BR, then m = T · BR / n frames arrive in a certain time T. The probability for 1 or more of these frames to have an undetected error is:

$$p_{fail} = 1 - p_{all\_frames\_ok}$$

$P_{all\_}$framesok can be calculated easily:

$$p_{all\_frames\_ok} = p_{one\_frame\_ok}^{m}$$

Pone_frame_ok can be calculated from $p_{res}$:

$$p_{one\_frame\_ok} = 1 - p_{res}$$

Now a relation between $p_{fail}$ and $p_{res}$ is found:

$$p_{fail} = 1 - (1 - p_{res})^{m} \approx m\,p_{res} = \frac{T\,BR}{n}\,p_{res} \quad for\ p_{res} \ll 1$$

If Serial WireRing is treated as a class 1 component according to ISO 26262 ASIL-D, a residual fault rate of 0.1 FIT is required.

$$\frac{p_{fail}}{T} \overset{!}{\le} 0.1\,FIT = \frac{0.1}{10^{9}\,hours} = 2.78 \cdot 10^{-14}\,s^{-1}$$

In the end all this yields:

$$\boxed{\frac{p_{fail}}{T} \approx \frac{BR}{n} \binom{n}{HD} p_{raw}^{HD} (1 - p_{raw})^{n-HD} \overset{!}{\le} 2.78 \cdot 10^{-14}\,s^{-1}}$$

The raw error rate $p_{raw}$ must be measurable, e.g. a value of 1 / month is not measurable - it would take years to verify. Some errors per second are practical. Thus, the CRC must be good enough to provide $p_{fail}$ under these conditions.
Numerical evaluation of this formula shows that HD = 4 is required. This is advantageous as HD = 5 would cause the length of the CRC to explode. According to Koopman, Philip and Chakravarty, Tridib: Cyclic Redundancy Code (CRC) Polynomial Selection For Embedded Networks, l.c., HD = 4 can be reached by a 10 bit CRC with polynomial 0x319 for n ≤ 501. Frames with n ≤ 56 could be protected with a 7 bit CRC, but saving 3 bits is not worth introducing a separate CRC for shorter frames. So only one unique 10 bit CRC is used:

> **Requirement**
>
> The CRC shall have 10 bits and the polynomial 0x319. 0x3FF shall be used as initial value. The CRC shall comprise each frame completely from the first FID0 bit up to the last bit preceding the CRC. The CRC makes up the last 10 bits of the frame. Next follows IFS.

With the above equation, the acceptable raw error probability $p_{raw}$ and the raw error rate $p_{raw} \cdot$ BR) can be calculated. It depends on the bit rate BR and the frame length n:

> **Requirement**
>
> Depending on the used bit rate BR, the Serial WireRing physical layer shall provide a raw bit error rate $p_{raw} < 4 \cdot 10^{-7} \cdot (BR / \text{Mbits/s})^{-0.25}$. This shall be verified by measurement, under worst case conditions, e.g. in the EMI lab under radiation.

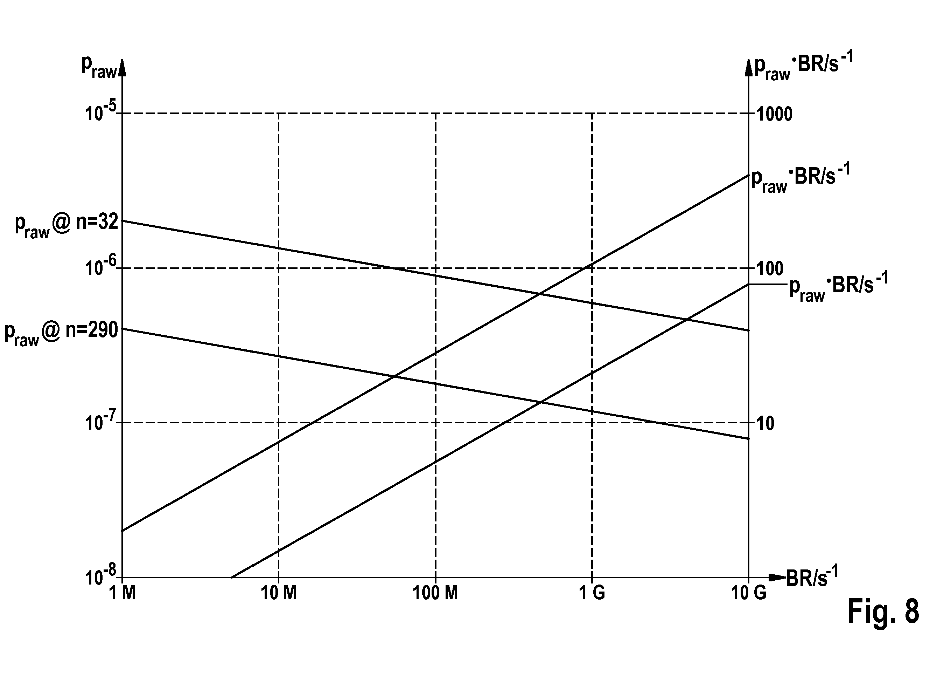

This requirement is illustrated in Fig. 8, which shows the tolerable Bit Error Rate versus the Bit Rate. It is very modest. This high bit error rate was chosen to be measurable with high confidence in limited time, not because it is expected in reality. A well designed system has $p_{raw}$ by magnitudes below these limits. E.g. DigRF assumes $p_{raw} = 10^{-13}$.

With HD = 4, at least 4 bit errors must occur within a frame to overcome the CRC. This is more likely for a long frame than for a short frame. So, for short frames, a higher raw error rate $p_{raw}$ can be handled. But the difference is only a factor about 5. As explained above, real word error rate is much lower. So it makes no sense to specify a limit that depends on the frame length. Maximum frame length is assumed.

It may be surprising that the required $p_{raw}$ decreases only slightly with rising bit rate BR, although more frames have to be protected. This is because a small decrease of $p_{raw}$ causes a big decrease of $p_{res}$. This is very advantageous: raising the bite rate requires only a slightly better $p_{raw}$, keeping the design simple and robust also at high bit rate.

($p_{raw} / t$) cannot be measured directly. The only available information is whether a frame was received successfully or if the CRC has detected an error. It is not known how much errors occurred within a disturbed frame. However, a single bit error within a disturbed frame is much more likely than a multi- bit error. So it is permissible to assume that each raw bit error causes a frame to be disturbed and that there is no second bit error within that frame.

As a consequence, ($p_{raw} / t$) not only is the rate of erroneous bits in the data stream, it is also the rate of disturbed frames detected by the receiver. So, in the closed ring, ($p_{raw} / t$) can be measured very easily by the master: software only needs to track RTR_ACC. If Serial WireRing is used in link mode, things are not that easy. Remember that in link mode, the slave cannot send any data to the master. In this case the slave must provide some measurement support, e.g. an output that provides a pulse for each disturbed frame. With this, an external counter can measure ($p_{raw} / t$).

Thus, with Serial WireRing safety is not a matter of believe, it can be verified by measurement.

## 2.11 Security

Security, if needed, can be implemented on a level higher than the physical (0) and data link (1) layer.

Since Serial WireRing is fully duplex, it can support challenge-response authentication between master and slave. Depending on the individual use case, different mechanisms for data integrity and/or data confidentiality may be implemented.

## 2.12 Automatic Frame Retry

If a Unicast or Interrupt Frame is corrupted by a transmission error, it may be re-sent automatically without software intervention, i.e. very fast. This feature can be used to increase availability. The price for this is a longer time until a Unicast Data Frame is guaranteed to have reached the receiver. A best compromise can be found for each system, may be with appropriate tool support.

Multicast Data Frames do not support this feature for the sake of simplicity (KISS principle). It would be too complicate to manage the toggle bits. This way Multicast Data Frames do not need any read-back by the master and can be used in Link Mode.

The software should regularly read and clear RTR_ACC to get an indication how often retries occurred. The bit error rate of a well designed Serial WireRing should be far below $10^{-8}$. So, frame retries are very rare and should not be considered to be a regular event. In many use cases it may be ok to switch off frame retries completely.

The maximum number of Interrupt Frame retries is globally set with MAX_IRTR. If this value is exceeded, a CPU interrupt is issued.

The maximum number of Unicast Data Frame retries is individually set with maxRetries. If this value is exceeded, the associated slave is no longer serviced and a CPU interrupt is issued.

## 2.13 Automatic Frame Repetition

A frame can be repeated up to 1023 times (= 1024 transmissions) without software intervention. During this time software can prolongate the associated queue. The queue can also be organized as a ring. In this case each WiriDataFrame repeats the specified number of times and then restarts with the base address txAdr for master to slave data and rxAdr for slave to master data. This way a pure hardware ring buffer can be built and the software can process the data with relaxed timing.

In the interrupt queue, a single interrupt from the slave can trigger only a single repetition (burstMode = 0) or all repetitions (burstMode = 1) to be processed.

### 2.14 Interrupts

There are 2 kinds of interrupts that might confuse:

● slave-to-master interrupts
● master-to-CPU interrupts

### 2.14.1 Slave to Master Interrupts

One goal of Serial WireRing is to avoid a separate interrupt line between the master and a slave. This is accomplished with Interrupt Frames.

> **Requirement**
>
> If a Serial WireRing slave needs service by the master, it shall toggle its interrupt counter. Each slave shall have its own 1 bit interrupt counter, which shall be 0 after lock. When the next Interrupt Frame passes by, the slave shall always inject its interrupt counter into the appropriate I bit of the Interrupt Frame.

> **Requirement**
>
> The master shall keep a copy of the interrupt counter for each slave in INT_CNT. When the master receives an Interrupt Frame, it shall compare each slave's interrupt counter to its own copy. If there is a deviation, then the slave needs service. If SL_INTEN is set, then the master shall set SL_INT and shall process the slave's request in two ways (may also be none or both):
> * Send one or more pre-defined Unicast Data Frames from the interrupt queue as pointed to by WIRI_FRI0...15. If this pointer is 0x00000000, no Unicast Data Frame is sent and SL_INT must be cleared by software. These Unicast Data Frames typically read or write some data from/to the slave. No software interaction is needed for this. The number of frames is defined in repeat and burstMode. SL_INT shall be cleared and the interrupt queue shall be blocked again after one transmission (burstMode = 0) or after its current queue element was processed completely and the queue was advanced to the next element (burstMode = 1).
> * Issue a CPU interrupt to trigger the software. The software should do whatever is necessary. This option can be enabled with SL_IE.
> Anyway the master shall update its copy of the interrupt counter.

A common use case may also be:

● Slave issues an interrupt to read or write some data.
● The interrupt queue is used to do this without software.
● The WiriDataFrame is configured to issue a CPU interrupt after all data was transferred to/from RAM.
● Multiple interrupt queue entries may be used to cumulate more than one slave interrupt, transfer data to/from one or different places in RAM and issue a CPU interrupt after all.

In the described way, each interrupt from slave to master is guaranteed to be executed exactly once. No interrupt acknowledge is necessary between master and slave. The maximum interrupt rate is determined by the Interrupt Frame repetition frequency, defined with N_LAT. The system must be designed in a way the Interrupt Frame repetition frequency is never exceeded by a slave. Otherwise some interrupts may be lost.

A slave may check for too many interrupts by raising an error if a new interrupt is requested before the current was picked up with an Interrupt Frame in time. Since this is a severe system fault, the slave might switch off and hold the ring completely. Alternatively the slave might only inform the master with an error status indicator and leave all further actions to the master.

Besides by the slave, a slave-to-master interrupt can also be triggered from other parts of the microcontroller or may be one of its I/O ports:

> **Requirement**
>
> The Serial WireRing master shall provide a foreign interrupt input line for each slave. So, in sum there are 16 foreign interrupt input lines that may be driven e.g. by the timer units of the microcontroller or other trigger sources. A rising edge on a foreign interrupt line sets SL_INT and has the same effect as an interrupt from the slave. However, INT_CNT is not affected. No enable / disable is defined on the Serial WireRing master's side, neither edge selection etc. This must be implemented externally, as appropriate.

As already mentioned, each slave has 2 Unicast Data Frame queues: A regular queue where software puts its requests in, and an interrupt queue. The regular queue is processed as long as it has not come to an end. The interrupt queue is normally blocked by SL_INT = 0. When SL_INT = 1 and WIRI_FRI0...15 is not 0x00000000, then the current interrupt queue element is enabled. When this element was processed once (burstMode = 0) or with all repetitions (burstMode = 1) and WIRI_FRI0...15 was set to *next,* then SL_INT is cleared and the interrupt queue is blocked again.

> **Requirement**
>
> When the regular queue and the interrupt queue are both enabled (SL_INT = 1), they shall be normally scheduled, i.e. if the regular queue's current frame has higher priority than the interrupt queue's, then the interrupt frame has to wait.

### 2.14.2 Master to CPU Interrupts

One goal of Serial WireRing is to avoid low latency software interrupt service routines. To accomplish this, sequential Unicast Data Frame processing, bit error handling and data read/write from/to memory are handled basically by the Serial WireRing master hardware. Interrupts from the Serial WireRing master to the CPU are useful anyway.

> **Requirement**
>
> The Serial WireRing module uses 17 interrupt lines for 7 kinds of events:
>
> - One line for general events:
>   1. The Serial WireRing got locked or unlocked (enabled by MA_IE, indicated by MA_LOCK)
>   2. RTR_ACC has reached 15 (also enabled by MA_IE, indicated by RTR_ACC)
>   3. The maximum number of Interrupt Frame retries MAX_IRTR was exceeded (also enabled by MA_IE, indicated by MAX_RID).
> - Sixteen lines, one for each slave:
>   4. The maximum number of Unicast Data Frame retries was exceeded (enabled by RTR_IE, indicated by RTR_IP).
>   5. A slave wants service or its foreign interrupt line was triggered (enabled by SL_IE, indicated by SL_INT).
>   6. A WiriDataFrame structure was processed (enabled by intEn, indicated by FR_IP).
>   7. The magic number of a WiriDataFrame is not correct.

This way it is easy to service different slaves by different CPUs in a multi-core system.

## 2.15 Device States

The Serial WireRing can be locked or unlocked. The Serial WireRing is locked when the master is locked, as indicated by MA_LOCK. The master is only locked when all slaves are locked.

Each slave can be locked or unlocked. A slave is locked when its PLL and its clock/data separator are working.

### 2.15.1 Master: Unlocked State

> **Requirement**
>
> After power-up, module reset, or loss of lock the master shall enter the unlocked state:
>
> - Unicast Data Frame toggle bits TOGL shall be cleared.
> - Interrupt request counters INT_CNT shall be cleared.
> - Lock indicator MA_LOCK shall be cleared.
> - Master's transmitter shall be stopped for at least 10 $T_{Bit}$ to have all slaves unlock, too.
> - Afterwards, the master shall continuously send IFS.

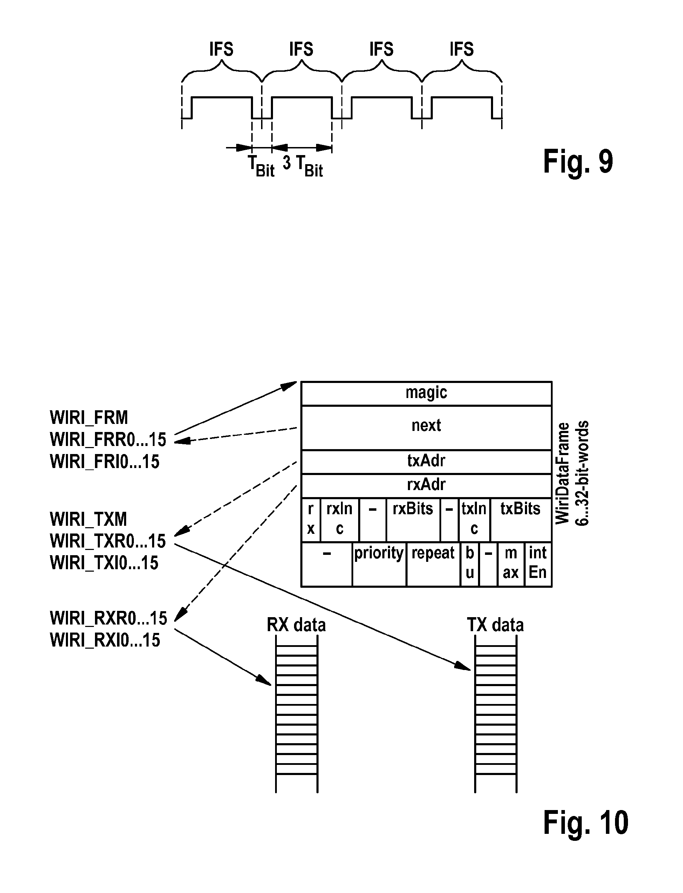

The pure IFS signal is well suited for the slaves to determine the bus clock octave and to lock. Fig. 9 shows a continuous IFS in the unlocked state of the Serial WireRing. The first slave uses the master's signal to lock, then the second slave locks on the output of the first slave, and so on. In the end, the master locks its receiver on the incoming data stream from the last slave. In this state the complete Serial WireRing is locked.

While this happens, software may set up the master's configuration for each slave and set MA_EN.

---

**Requirement**

When
- the master is locked (MA_LOCK = 1) and

- the master is enabled_MA_EN = 1

then the master shall
- first send an Interrupt Frame to give each slave the chance to learn its

  own address.

- start scheduling and sending Data Frames and further Interrupt

  Frames.

---

The Serial WireRing master is usually a peripheral module in a microcontroller. It will use the microcontroller's I/O pins. After reset, these I/O pins are usually configured as inputs. Software first has to configure a pin as an output of a certain peripheral module, e.g. Serial WireRing. This fits very well into the master's states:

- The slaves lock one by one, while software initializes all registers and data structures in RAM.
- When software has set MA_EN and the Serial WireRing has locked (MA_LOCK = 1), operation starts.

The DLL of the master's input continuously compensates for any phase drift of the received data stream, e.g. caused by a temperature change.

To get the Serial WireRing locked, all slaves and in the end the master must lock one by one. So the synchronization time for the whole Serial WireRing is

$$T_{SyncRing} = T_{Sync0} + T_{Sync1} + ... + T_{SyncY} + T_{SyncMaster} \text{ with } Y = N\_SL$$

The individual synchronization time of each slave and the master is not specified here. It depends heavily on application's needs, cost and technology. This value (typical and maximum) must be defined in the data sheet of each device. Reasonably it will be in the range of 50 $T_{Bit}$. Maybe it has different values for initial power-up and recovery.

### 2.15.2 Master: Locked State

In the locked state, the master continuously sends data and Interrupt Frames, separated by IFS.

---

**Requirement**

If the master receiver's DLL gets out of lock or if software sets the master reset bit MA_RES or clears the master enable bit MA_EN, then the master shall abort the current frame immediately and enter the unlocked state.

---

### 2.15.3 Slave: Unlocked State

> **Requirement**
>
> After no edge at its receiver for more than 5 $T_{Bit}$, power-up, hardware reset, or loss of lock a slave shall enter the unlocked state:
> - Unicast Data Frame toggle bit is cleared.
> - Interrupt request counter is cleared.
> - Transmitter is disabled.

In the unlocked state, the slave waits for IFS (Fig. 9) to arrive at its receiver. The slave determines the clock frequency and locks its PLL. Now the slave is locked and enables its transmitter. This enables the next slave to lock, and so on, up to the master's receiver. In the end, the master locks and the whole Serial WireRing is locked.

### 2.15.4 Slave: Locked State

> **Requirement**
>
> A Serial WireRing slave shall enter the locked state, when its PLL and the data separator work correctly:
> - Transmitter shall be enabled.
> - First Interrupt Frame shall be expected to learn the own address.
> - After learning the own address, the slave shall accept Data Frames and check the address in each further Interrupt Frame.

The slave echoes the received data with 1 $T_{Bit}$ delay at its output and works as a signal conditioner. In case of a read command the slave will inject its response to the master into the bit stream.

1 $T_{Bit}$ delay will never apply exactly, because analog delays of the input and output circuitry as well as the signal run time on the wire add to this value.

The slave's PLL is locked on the received data stream. The data stream clock is generated by the master's central clock generator, usually an Xtal with PLL or some other high quality clock source. So the slave's clock is as precise as the master's.

### 2.16 Serial WireRing Master's Register and Memory Structure

The register interface of the Serial WireRing master was designed to fulfill these targets:

- simple
- software-affine
- high throughput
- few interrupts
- multi-core compatible

The registers of the Serial WireRing master are defined to be 32 bit wide. This is to emphasize the need for 32-bit atomic access. If this is assured, the implementation can also use a smaller bus width, if it is fast enough.

Bits are numbered in little endian mode ("Intel Style"). For a big endian mode system ("IBM Style", "Motorola Style") the bit order 0...31 has to be reversed and maybe the byte order within a 32 bit word has to be reversed, too.

Reserved bits have to be ignored when reading and written with 0.

Register access attributes:

**r**      this value contains information to be read.

**w**     this value can be written.

**w1**    this value cannot be set, but it can be cleared by writing a 1. writing a 0 has no effect.

**wd**    this value can only be written when MA_EN = 0. Write access during operation is ignored.

**h**      this value is (also) written by internal hardware.

### 2.16.1 Overview

The Serial WireRing Master shall have direct access to the microcontroller's memory. So it is a bus master.

All parameters that are needed to process a Data Frame reside in a memory structure called WiriDataFrame. These structures are organized as linked lists, called queue. Each list element can reside anywhere in RAM, no special order is necessary. So the RAM can be used flexibly.

The serial WireRing master only reads the WiriDataFrame, it does not change any bit. So a WiriDataFrame may be re-used infinitely.

All Multicast Data Frames reside in a single queue. The Unicast Data Frames reside in individual queues for each slave. Each slave has two queues: one for regular operation and one for interrupts. All these queues are scheduled in common according to *priority.*

A single WiriDataFrame can issue 1...1024 Data Frames to be sent using the *repeat* parameter. Then the next WiriDataFrame from the linked list is processed. If *next* = 0x00000000 there is no successor and processing stops. The linked list may be closed to a ring, i.e. after the last element processing continues with the first element. A WiriDataFrame may link to itself. Then it is processed endlessly.

TX- data and RX- data reside separately in RAM, in succeeding order. The WiriDataFrame contains a pointer txAdr to read the TX- data and another pointer rxAdr to write the RX- data. After each memory read or write these pointers can be auto- incremented. The next WiriDataFrame can leave each of these pointers as is or assign a new value. With this feature it is possible to configure continuous memory areas, ring buffers, alternating buffers and many other strategies.

The address resolution for TX- and RX-data is a single byte. But for a high speed implementation the master controller can group byte accesses to 16- or 32-bit-words. The necessary information is available.

Fig. 10 gives an overview of the functionality of the pointer registers and the memory structures. For each queue there is a 32-bit-register WIRI_FRM, WIRI_FRR0...15 or WIRI_FRI0...15 with the address of the WiriDataFrame that is currently processed. If this register holds 0x00000000, then this queue is not processed. To start processing, software must write the address of the queue's first WiriDataFrame into this register. When a WiriDataFrame has been processed, this register is automatically loaded with *next* (which may be 0x00000000 to stop processing).

If a WiriDataFrame is started to be processed, the TX-data register WIRI_TXM, WIRI_TXR0...15 orWIRI_TXI0... 15 is loaded with txAdr. If txAdr is 0x00000000, then the TX-data address register is no loaded and TX-data is continued to be read from the current address.

The same is true for RX-data. Note that there is no RX-data for Multicast Data Frames, so there is no register WIRI_PTRADM. RX-data is extended (signed or unsigned) before written into RAM.

### 2.16.2 WIRI_CONFIGO

**Requirement**
The Serial WireRing master shall provide a first configuration and status register with functionality as follows:

Module relative address: 0x0000
Initialization value after reset: 0x00000000

| 31 | 30 | 29 | 28 | 27 | 26 | 25 | 24 | 23 | 22 | 21 | 20 | 19 | 18 | 17 | 16 | 15 | 14 | 13 | 12 | 11 | 10 | 9 | 8 | 7 | 6 | 5 | 4 | 3 | 2 | 1 | 0 |
|---|---|---|---|---|---|---|---|---|---|---|---|---|---|---|---|---|---|---|---|---|---|---|---|---|---|---|---|---|---|---|---|

| reserved | N_SL | RTR_ACC | MAX_IRTR | MA_IMUL | MA_CRC | MA_LINK | MAX_RID | MA_IP | MA_IE | MA_LOCK | MA_EN | MA_RES |
|---|---|---|---|---|---|---|---|---|---|---|---|---|
|  | r / wd | r / w / h | r / w | r / w1 / h | r / wd | r / wd | r / w1 / h | r / w1 / h | r / w | r / h | r / w | r / w1 / h |

| MA_RES | 0 / 1 | Master reset:<br>Writing a 1 resets the Serial WireRing master to power-on state. Reads 1 as long as reset process is running. During this time all other register reads are undefined (except this bit in this register), writing any register (including this one) has no effect. So software must wait until this bit reads 0. This is also true after power-on or hardware reset, because this bit is also 1 after power-up or hardware reset, until the reset is finished.<br><br>After reset at least<br>- WIRI_CONFIG0 = 0x00000000 (esp. MA_EN = 0)<br>- WIRI_CONFIG1 = 0x00000000<br>- WIRI_FRM = 0x00000000<br>- WIRI_FRR0...15 = 0x00000000<br>- WIRI_FRI0...15 = 0x00000000<br>- WIRI_SLAVE0...15 = 0x00000000 |
|---|---|---|
| MA_EN | 0 / 1 | Master enable:<br>0 = Serial WireRing master disabled. No frames. Sending only IFS.<br>1 = Serial WireRing operates, if MA_LOCK is 1.<br><br>When this bit is cleared,<br>- the master switches off its transmitter for 10 $T_{Bit}$, causing all slaves and the master itself to unlock, which in turn may cause an interrupt to the CPU.<br>- the current frame is treated as not being processed successfully.<br>- the master clears the toggle bit TOGL for each slave.<br>- the master clears the interrupt counter INT_CNT for each slave.<br>- the master clears SL_INT for each slave.<br><br>When this bit is set while MA_LOCK is 1, the master<br>- sends the first Interrupt Frame to allow all slaves to enumerate.<br>- starts regular scheduling of data and Interrupt Frames. |

| MA_LOCK | 0 / 1 | Locked State, only read:<br>0 = Serial WireRing (= master's receiver) not locked<br>1 = Serial WireRing locked<br><br>MA_EN = 1 is only effective when this bit is 1. |
|---|---|---|
| MA_IE | 0 / 1 | CPU master interrupt enable:<br>0 = CPU interrupts disabled (MA_IP must be polled)<br>1 = CPU interrupts enabled (interrupt when MA_IP is set) |
| MA_IP | 0 / 1 | This bit is set,<br>- when reset has finished<br>- MA_LOCK changes state<br>- the maximum retry count MAX_IRTR<br>  of an Interrupt Frame was exceeded<br>- RTR_ACC has reached 15.<br><br>If MA_IE is set, a CPU interrupt is issued on these events.<br><br>This bit can be cleared by writing a 1.<br>Writing a 0 does not change this bit. |
| MAX_RID | 0 / 1 | This bit indicates that the maximum number of Interrupt Frame retries was exceeded.<br><br>This bit can be cleared by writing a 1.<br>Writing a 0 does not change this bit. |
| MAX_IRTR | 0 ... 7 | Maximum number of Interrupt Frame retries:<br><br>If the master has retried an Interrupt Frame this times unsuccessfully, it sets MA_IP. |
| RTR_ACC | 0 ... 15 | Accumulated number of data and Interrupt Frame retries for all slaves.<br>Counts up every time a data or Interrupt Frame is re-sent.<br>If 15 is reached, counting is stopped.<br>Safety software polls this value to observe the quality of transmission.<br><br>When this counter reaches 15, MA_IP is set. Software may use the associated interrupt to avoid polling. |
| N_SL | 0 ... 15 | Number of slaves minus one, giving 1 ... 16 slaves.<br>This value can only be written as long as MA_EN = 0.<br>During operation, write access is ignored. |
| reserved | | For future extensions. Mask out after reading, write always 0. |

| MA_CRC | 0 / 1 | 0 = no CRC in Data Frames.<br>1 = CRC enabled.<br><br>Interrupt Frames are always protected by CRC. |
|---|---|---|
| MA_LINK | 0 / 1 | 0 = Ring Mode<br>1 = Link Mode<br><br>This value can only be written as long as MA_EN = 0.<br>During operation, write access is ignored. |
| MA_IMUL | 0 / 1 | This bit is set,<br>- when the last Multicast Data Frame was sent.<br><br>If MA_IE is set, a CPU interrupt is issued on this event.<br><br>This bit can be cleared by writing a 1.<br>Writing a 0 does not change this bit. |

### 2.16.3 WIRI_CONFIG1

**Requirement**

The Serial WireRing master shall provide a second configuration and status register with functionality as follows:

Module relative address: 0x0004
Initialization value after reset: 0x00000000

| 31 | 30 | 29 | 28 | 27 | 26 | 25 | 24 | 23 | 22 | 21 | 20 | 19 | 18 | 17 | 16 | 15 | 14 | 13 | 12 | 11 | 10 | 9 | 8 | 7 | 6 | 5 | 4 | 3 | 2 | 1 | 0 |
|---|---|---|---|---|---|---|---|---|---|---|---|---|---|---|---|---|---|---|---|---|---|---|---|---|---|---|---|---|---|---|---|
| | | | | | | | N_LAT | | | | | | | | | | | | | MOD_ID | | | | | | | | LINK_WAIT | | | |
| | | | | | | | r / w | | | | | | | | | | | | | r | | | | | | | | r / w | | | |

| reserved | | For future extensions. Mask out after reading, write always 0. |
|---|---|---|
| MOD_ID | 1.0 ...<br>15.15 | Module version ID:<br><br>Upper nibble: Main ID, incremented on specified functional changes.<br><br>Lower nibble: Improvement ID, incremented on implementational changes (bug fixes) to come closer to the specified functionality. |

| N_LAT | 0 ...<br>65535 | Maximum number of clock cycles from one Interrupt Frame to the next. This value may also be written during operation. It takes effect on the master's next scheduling. |
|---|---|---|
| LINK_WAIT | 0 ... 255 | In Link Mode, after activation, the master waits for this number of clock cycles before it sends the first frame. |

**2.16.4 WIRI_FRM**

> **Requirement**
>
> For the Multicast Data Frames, the Serial WireRing master shall provide a Multicast Data Frame pointer register with functionality as follows:
>
> Module relative addresses: 0x0008
> Access attributes: r / wd / h
> Initialization value after reset: 0x00000000
>
> There is a linked list (queue) of Frame structures, WiriDataFrame, in RAM. This register holds the address of the current entry. When the current WiriDataFrame structure is processed successfully, the master loads this register with *next*, the next element from the queue.
>
> If this register is 0x00000000, no Multicast Data Frame is sent. So if the end of the queue is reached (*next* = 0x00000000), processing stops automatically. When it is 0x00000000, this register may be written by software, although MA_EN is set. So software can start a new Multicast Data Frame (queue).
>
> If this register is not 0x00000000, writing is forbidden. However, this register can be written indirectly by changing *next*.
>
> By reading this register software can determine which part of the queue is already processed (and may be overwritten with new queue entries linked to the end of this or another queue).

**2.16.5 WIRI_TXM**

**Requirement**

For the Multicast Data Frames, the master shall provide a data field pointer register with functionality as follows:

Module relative addresses: 0x000C
Access attributes: r / h
Initialization value after reset: 0x00000000

This register holds the address of the data field that will be sent to the slave(s) next. It is loaded with txAdr (if txAdr is > 0) from the current regular queue element when it is started to be processed.

txBits from this address will be sent, the least significant bit of the pointed byte first. If 8 * txInc is < txBits, then the missing bits are sent as 0.

When the Multicast Data Frame was successfully sent, this pointer is incremented by txInc (in byte granularity) to address the data to be sent with the next frame.

If this register is 0x00000000, no Multicast Data Frame is sent.

### 2.16.6 WIRI_FRR0...15

**Requirement**

For each of the up to 16 slaves, the Serial WireRing master shall provide a regular Unicast Data Frame pointer register with functionality as follows:

Module relative addresses: 0x0040 ... 0x007C (16 registers)
Access attributes: r / wd / h
Initialization value after reset: 0x00000000

Similar to WIRI_FRM, there is a linked list of Unicast Data Frame structures, WiriDataFrame, in RAM. This register holds the address of the current entry of the regular queue for each slave. Consequently there are 16 instances of this register.

**2.16.7 WIRI_FRI0...15**

> **Requirement**
>
> For each of the up to 16 slaves, the Serial WireRing master shall provide an interrupt Unicast Data Frame pointer register with functionality as follows:
>
> Module relative addresses: 0x0080 ... 0x00BC (16 registers)
> Access attributes: r / wd / h
> Initialization value after reset: 0x00000000
>
> Same as WIRI_FRR0...15, but for the slave's interrupt queue. If the slave has issued an interrupt, SL_INT is set and the queue element pointed to by this register is activated. This does not mean that this WiriDataFrame is processed immediately. It is scheduled as any other queue, so its priority decides when it will be processed. If *repeat* of the current WiriDataFrame is > 0 and if burstMode = 1, then more than one Unicast Data Frame will be processed on the one interrupt request from the slave, before SL_INT is cleared. So the slave can issue a "burst" with one interrupt. Each frame is normally scheduled, as is the first. If burstMode = 0, the slave's interrupt causes only the next repetition to be processed and SL_INT is cleared after this one transfer.
>
> When the current WiriDataFrame is processed with all repetitions, this pointer is loaded with *next*.
>
> Additionally, a CPU interrupt is issued if SL_INTEN is set.
>
> If this pointer is 0x00000000, no frame is sent. However, SL_INT is set and a CPU interrupt is issued if SL_INTEN is set. In this case, the interrupt service routine must reset SL_INT manually

**2.16.8 WIRI_TXR0...15**

> **Requirement**
>
> For each of the up to 16 slaves, the Serial WireRing master shall provide a regular data field pointer register with functionality as follows:
>
> Module relative addresses: 0x00C0 ... 0x00FC (16 registers)
> Access attributes: r / h
> Initialization value after reset: 0x00000000
>
> Same as WIRI_DFM, but one register for the regular queue of each slave. So there are 16 instances of this register.

**2.16.9 WIRI_TXI0...15**

> **Requirement**
>
> For each of the up to 16 slaves, the Serial WireRing master shall provide an interrupt data field pointer register with functionality as follows:
>
> Module relative addresses: 0x0100 ... 0x013C (16 registers)
> Access attributes: r / h
> Initialization value after reset: 0x00000000
>
> Same as WIRI_TXR0...15, but holds data field address from the interrupt queue of the slave.

**2.16.10 WIRI_RXR0...15**

> **Requirement**
>
> For each of the up to 16 slaves, the Serial WireRing master shall provide a regular slave's answer pointer register with functionality as follows:
>
> Module relative addresses: 0x0140 ... 0x017C (16 registers)
> Access attributes: r / h
> Initialization value after reset: 0x00000000

This register holds the address where the next data from the slave will be stored. Consequently there are 16 instances of this register. It is loaded with rxAdr (if rxAdr is > 0) when processing of the associated WiriDataFrame structure of the regular queue starts.

rxBits will be stored at the address. If 8 * rxInc is > rxBits, the missing bits are written as 0 (when rxExt = 0) or as a copy of the last bit (sign extension, when rxExt = 1).

If 8 * rxInc is < rxBits, only 8 * rxInc bits are stored, the rest of the bits is lost.

If this register is 0x00000000, nothing is written to RAM.

**2.16.11 WIRI_RXI0...15**

**Requirement**

For each of the up to 16 slaves, the Serial WireRing master shall provide an interrupt slave's answer pointer register with functionality as follows:

Module relative addresses: 0x0180 ... 0x01BC (16 registers)
Access attributes: r / h
Initialization value after reset: 0x00000000

Same as WIRI_RXR0...15, but for the interrupt queue.

**2.16.12 WIRI_SLAVE0...15**

**Requirement**

For each of the up to 16 slaves, the Serial WireRing master shall provide a configuration and status register with functionality as follows:

Module relative addresses: 0x01C0 ... 0x01FC (16 registers)
Initialization value after reset: 0x00000000

| 31 30 29 28 27 26 25 24 23 22 | 21 20 19 18 17 16 15 14 13 12 | 11 10 | 9 | 8 | 7 | 6 | 5 | 4 | 3 | 2 | 1 | 0 |
|---|---|---|---|---|---|---|---|---|---|---|---|---|
| RPI_CNT | RPT_CNT | RTR_CNT | TOGL | INT_CNT | SL_INTEN | SL_INT | FR_IP | MAG_IP | RTR_IP | MAG_IE | RTR_IE | SL_IE |

r / w / h · r / w / h · r / h · r / wd / h · r / h · r / w · r / w1 / h · r / w1 / h · r / w1 / h · r / w1 / h · r / w · r / w · r / w

| Name | Value Range | Description |
| --- | --- | --- |
| SL_IE | 0 / 1 | Slave to CPU interrupt enable:<br>1 = A CPU interrupt is issued when SL_INT is set (by the slave or foreign interrupt).<br>0 = No interrupt generated in this case. |
| RTR_IE | 0 / 1 | Retry error interrupt enable:<br>1 = A CPU interrupt is issued when RTR_IP is set.<br>0 = No interrupt generated, RTR_IP must be polled. |
| MAG_IE | 0 / 1 | Magic number interrupt enable:<br>1 = A CPU interrupt is issued when MAG_IP is set.<br>0 = No interrupt generated, MAG_IP must be polled. |
| RTR_IP | 0 / 1 | Retry error interrupt pending:<br>This bit is set, when a Unicast Data Frame failed being processed and RTR_CNT = 0.<br>Writing 1 clears this bit.<br>Writing 0 doesn't change this bit. |
| MAG_IP | 0 / 1 | Magic number interrupt pending:<br>This bit is set, when WIRI_FRR0...15 or WIRI_FRI0...15 is loaded and *magic* doesn't fit.<br>Writing 1 clears this bit.<br>Writing 0 doesn't change this bit. |
| FR_IP | 0 / 1 | Frame processed interrupt pending.<br>Depending on intEn, this bit is set, when a Unicast Data Frame was processed.<br>Writing 1 clears this bit.<br>Writing 0 doesn't change this bit. |

| SL_INT | 0 / 1 | Slave interrupt indicator:<br>This bit is set when a received Interrupt Frame indicates an interrupt request from the slave while SL_INTEN is set, or if a positive edge occurs at the foreign interrupt input for the slave.<br><br>While this bit is 1, the interrupt queue element pointed to by WIRI_FRI0...15 is scheduled additionally to the regular queue of the slave.<br><br>This bit is cleared after the interrupt queue element was processed successfully, or by software if WIRI_FRI0...15 is 0x00000000 and SL_IE is set.<br><br>Writing 1 clears this bit.<br>Writing 0 doesn't change this bit. |
|---|---|---|
| SL_INTEN | 0 / 1 | Slave interrupt enable:<br>0 = a change of INT_CNT does not set SL_INT.<br>1 = a change of INT_CNT does set SL_INT.<br><br>Foreign interrupts are always enabled and not gated by this bit. |
| INT_CNT | 0 / 1 | Copy of slave's interrupt counter to detect a change:<br>This 1-bit-counter serves to detect an interrupt from the slave.<br>The slave has also this counter. If the slave issues an interrupt, it increments its counter. With the next Interrupt Frame, the slave sends its interrupt counter value to the master. When the master receives the Interrupt Frame, it compares the new counter value to this value. If there is a difference, the master updates INT_CNT and, if SL_INTEN is set, sets SL_INT. |
| TOGL | 0 / 1 | Toggle bit:<br>Before the master sends a new Unicast Data Frame to the slave, it toggles this bit. This bit is sent as FID1 to the slave. The slave compares this bit to its private copy. A difference indicates that this is a new Unicast Data Frame.<br><br>If the master re-sends the last Unicast Data Frame because it was not successfully processed, the master does not toggle this bit. If the slave got this Unicast Data Frame already, it shall suppress reacting a second time and just send its data (if any) to the master again. If the slave didn't get this command yet, the slave will react normally.<br><br>The master resets this bit when unlocked.<br>Each slave resets this bit at loss of lock. |

| RTR_CNT | 0 ... 3 | Retry counter:<br>When TOGL is toggled, this value is loaded with maxRetries. If the Unicast Data Frame is not processed successfully, this value comes into play:<br><br>If 0, RTR_IP is set and further processing for this slave is stopped. A CPU interrupt is issued if RTR_IE is set.<br><br>If not 0, this value is decremented by 1 and the Unicast Data Frame is re-sent on next occasion. |
| RPT_CNT | 0 ... 1023 | Repeat counter for the current WiriDataFrame from the regular queue. When WIRI_FRR0...15 is loaded, this value is loaded with *repeat*.<br><br>After each successful processing of the Data Frame, this counter is checked for 0:<br>> 0: this counter is decremented by one and the current WiriDataFrame is processed once more on the next occasion.<br>= 0: WIRI_FRR0...15 is loaded with *next*, causing this value to be reloaded, too.<br><br>Don't confuse frame repetition with frame retry RTR_CNT. |
| RPI_CNT | 0 ... 1023 | Same as RPT_CNT, but for the interrupt queue, pointed to by WIRI_FRI0...15.<br><br>A single interrupt from the slave causes all repetitions to be done ("burst" interrupt). |

### 2.16.13 WiriDataFrame

For each slave, there are 2 queues with Unicast Data Frames:

- Regular queue: if no interrupt from the slave is pending, the master processes this queue.
- Slave's interrupt queue: each time the slave issues an interrupt, the master processes this queue.

So, in sum there may be up to 32 queues. Each queue is a linked list of WiriDataFrame structures in RAM. Each queue is processed by the Serial WireRing master autonomously without any software interaction. A queue entry may be processed up to 1024 times (*repeat*) before advancing to the next entry.

The last queue entry may reference the first entry as next. Then the queue is processed endlessly. A queue can also be used only once. Then software has to extend the end of the queue on the fly with new Unicast Data Frames. While doing this the software may overwrite the queue entries that have already been processed.

The data field of each frame is directly read/written from/to RAM. In combination with the repeat feature this provides a DMA like feature to transfer data from/to a slave with very high speed, without software intervention.

The queues reside in RAM. There are different implementation options:

- Dedicated dual ported RAM (very fast, expensive)
- Special peripheral RAM (easy to implement)
- Normal RAM (most flexible, conflicts with regular RAM accesses, safety issues)

The WiriDataFrame structure however is always the same.

**Requirement**

The Serial WireRing master shall support this 6 x 32 bits WiriDataFrame structure, defined as follows:

| Name | Word | Bits | Range | Description |
|------|------|------|-------|-------------|
| magic | 0 | 32 | — | The software must set this word to 0xC90FA65B. The Serial WireRing master checks this value when it starts to process the structure. If it doesn't find this value, it stops processing and sets MAG_IP. |

| next | 1 | 32 | — | Pointer to next Data Frame. This value is loaded into WIRI_FRR0...15 resp. WIRI_FRI0...15 when processing of this structure starts.<br><br>If this value is 0x00000000 or points to an address without the correct *magic* value, scheduling for the slave is stopped until software writes a new value into WIRI_FRR0...15 resp. WIRI_FRI0...15.<br><br>This value may also point to itself. In this case this structure is processed endlessly. Note that WIRI_TXR0...15 resp. WIRI_TXI0...15 and WIRI_RXR0...15 resp. WIRI_RXI0...15 are reloaded in this case. In combination with *repeat* this can be used to build a ring buffer (FIFO) in RAM. |
|---|---|---|---|---|
| txAdr | 2 | 32 | — | Initial address of the data field DF. This value is loaded into WIRI_TXR0...15 resp. WIRI_TXI0...15 when processing of this structure starts.<br><br>If this value is 0x00000000, then WIRI_TXR0...15 resp. WIRI_TXI0...15 is not reloaded and the current value is preserved. This way it is possible to proceed in the queue without resetting the ring buffer. |
| rxAdr | 3 | 32 | — | Initial address of the slave's answer data. This value is loaded into WIRI_RXR0...15 resp. WIRI_RXI0...15 when processing of this structure starts.<br><br>If this value is 0x00000000, then WIRI_RXR0...15 resp. WIRI_RXI0...15 is not reloaded and the current value is preserved. This way it is possible to proceed in the queue without resetting the ring buffer. |
| txBits | 4 | 0 ... 8 | 0 ... 256 | Data field DF length in bits. Data is read from WIRI_TXR0...15 resp. WIRI_TXI0...15. Depending on txInc, this data may be truncated or extended. |
| reserved | 4 | 9 ... 11 | — | Must be initialized with 0. Don't use. |

| txInc | 4 | 12 ... 14 | 0 ... 7 | This value (in bytes) is added to WIRI_TXR0...15 resp. WIRI_TXI0...15 after reading the data to be sent to the slave. This separate value allows for convenient data alignment, allowing the CPU fast access with full bandwidth.<br><br>If 8 * txInc > txBits, then simply the txBits least significant bits from address WIRI_TXR0...15 resp. WIRI_TXI0...15 are sent.<br><br>E.g. for a 24 bit DAC it might be useful to set txBits = 24 and txInc = 4 to achieve 32 bit word alignment of the DAC values in RAM.<br><br>If 8 * txInc < txBits, then 0s are sent for the missing bits. This is useful if an answer from the slave is requested. Then no RAM must be wasted for this space. |
|---|---|---|---|---|
| reserved | 4 | 15 | — | Must be initialized with 0. Don't use. |
| rxBits | 4 | 16 ... 24 | 0 ... 256 | Length of slave's answer in bits. This data is written to address WIRI_RXR0...15 resp. WIRI_RXI0...15. If WIRI_RXR0...15 resp. WIRI_RXI0...15 = 0x00000000, then nothing is written to RAM.<br><br>If rxBits = txBits, then the whole data field DF is treated as the slave's answer and stored in RAM.<br><br>If rxBits > txBits, then it is reduced to txBits automatically.<br><br>Depending on rxInc and rxExt, the data is truncated or extended before it is written to RAM.<br><br>If rxBits = 0, but rxInc > 0, then 0 is written to RAM (may be useful for test purposes). |
| reserved | 4 | 25 ... 27 | — | Must be initialized with 0. Don't use. |

| rxInc | 4 | 28 ... 30 | 0 ... 7 | This value (in bytes) is added to WIRI_RXR0...15 resp. WIRI_RXI0...15 after writing the received data from the slave to RAM. This separate value allows for convenient data alignment, allowing the CPU fast access with full bandwidth.<br><br>If 8 * rxInc < rxBits, then only the 8 * rxInc least significant bits from address WIRI_RXR0...15 resp. WIRI_RXI0...15 are stored in RAM.<br><br>If 8 * rxInc > rxBits, then the rxBits bits from address WIRI_RXR0...15 resp. WIRI_RXI0...15 are extended to 8 * rxInc bits and stored in RAM.<br><br>The extension can be unsigned with 0s (rxExt = 0) or signed with the MSB (rxExt = 1). |
| rxExt | 4 | 31 | 0 / 1 | If 8 * rxInc > rxBits, then this bits determines how the additional MSBs are set:<br>0 = extent with 0s (unsigned)<br>1 = extent with MSB (signed) |
| intEn | 5 | 0 ... 1 | 0 ... 3 | Interrupt enable. FR_IP is set ...<br>0: never.<br>1: when the current frame was successfully repeated the pre-defined number of times.<br>2: when the current frame was processed successfully (i.e. including retries).<br>3: when the current frame was processed, successful or not. |
| maxRetries | 5 | 2 ... 3 | 0 ... 3 | This value determines how often a Data Frame is re-sent, before RTR_IP is set.<br><br>0: no retry allowed. Error is set immediately.<br><br>1...3: The Data Frame is retried up to 1...3 times. |
| reserved | 5 | 4 | — | Must be initialized with 0. Don't use. |

| | | | | |
|---|---|---|---|---|
| burstMode | 5 | 5 | 0 / 1 | This bit controls the function of *repeat* for the interrupt queue elements:<br><br>0: an interrupt from the slave triggers only <u>one</u> Unicast Data Frame to be sent. SL_INT is cleared and the interrupt queue is locked after this one transfer. So, *repeat* + 1 interrupts are needed until the interrupt queue element is completely processed.<br><br>1: an interrupt from the slave triggers *repeat* + 1 Unicast Data Frames to be sent. The interrupt queue element is completely processed, before SL_INT is cleared and the interrupt queue is locked. |
| repeat | 5 | 6 ... 15 | 0 ... 1023 | Number repetitions. This value is loaded into RPT_CNT resp. RPI_CNT when this WiriDataFrame is started to be processed.<br><br>This value allows the Data Frame to be processed 1 ... 1024 times. This is very useful if blocks of data are to be moved to/from the slave.<br><br>In conjunction with the slave interrupt, burstMode and the separate interrupt queue this feature allows autonomous synchronous data movements in a FIFO-like manner. |
| priority | 5 | 16 ... 23 | 0 ... 255 | Each Data Frame may have an individual priority. The master's scheduler chooses the Data Frame with the highest priority within all queues to be sent next to its slave.<br><br>If a Unicast Data Frame is not processed successfully, it is re-scheduled, i.e. if another Data Frame with higher priority wants to be sent, it is sent before the failed Unicast Data Frame is repeated. |
| reserved | 5 | 24 ... 31 | — | Must be initialized with 0. Don't use. |

### 3 Use Cases & Application Hints

**3.1 Signal Integrity**

Serial WireRing uses uni-directional point-to-point signaling.

"Uni- directional" means that data only flows in one direction along the daisy chain ring topology. Point- to-point means that the line connects exactly one transmitter module to one receiver module, without any branch in- between. This has many advantages:

● Easy design, low development risk

- ● High data rate
- ● Low EMI
- ● Low power consumption
- ● Flexible voltage levels
- ● Easy isolation / line driving
- ● No skew issue

Basically, any connection can be used as the communication medium:

- ● Single ended
- ● LVDS
- ● Optical
- ● any other

A Serial WireRing does not need to be homogenous in its connections. Different connections can be used within the same Serial WireRing if appropriate. E.g. it may be useful to use 3.3 V CMOS level between the master and the first and last slave (because the master μC may not support 5 V) and 5 V level between the slaves (if they support it) to have better noise immunity in most parts of the ring.

Inverting or non-inverting level shifters, line drivers, optical isolators and optical transceivers may be used within the ring for galvanic isolation or longer distance. All this is easy because there are only 2 lines, polarity doesn't matter and there occurs no skew between clock, data and chip select lines (because they don't exist).

Some basic design examples are given in the following sections.

### 3.1.1 Low Speed Device Connection

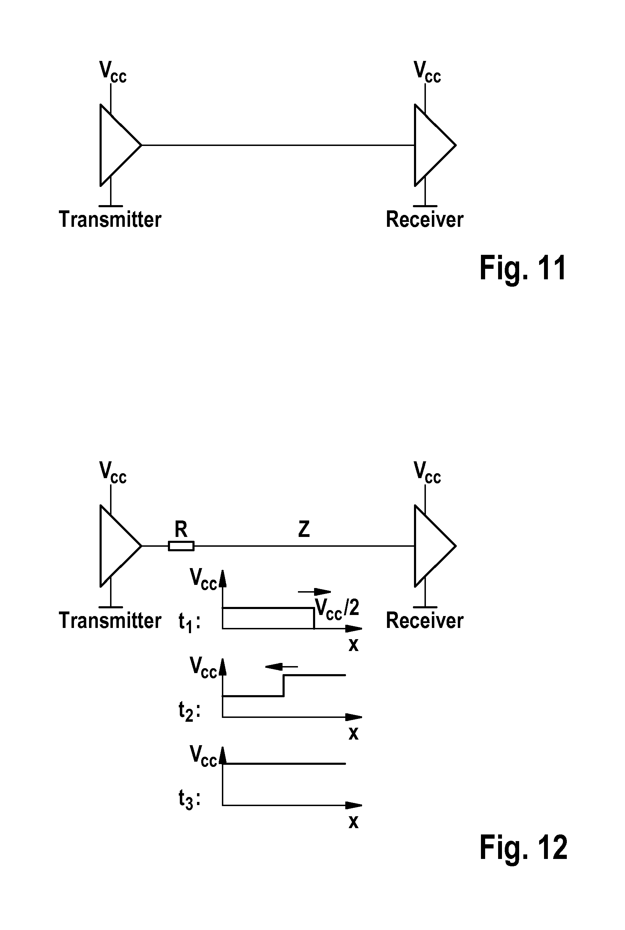

For low speed up to some Mbit/s, a simple piece of wire trace without any matching will suffice (see Fig. 11).

As a general rule of thumb, termination is not needed as long as the signal run time forth and back is below the rise or fall time of the transmitter:

$$2 \cdot t_{run} = 2 \cdot \frac{l_{trace}}{v_p \cdot c} \overset{!}{<} t_{rf}$$

or

$$l_{trace} \overset{!}{<} t_{rf} \cdot \frac{v_p \cdot c}{2}$$

$l_{trace}$    length of the signal trace
$v_p$    velocity factor of the trace, e.g. 0.45 for FR4 PCB material
c    speed of light
$t_{rf}$    rise / fall time of the transmitter's output stage

E.g. for a transmitter with 10 ns rise and fall time, the trace length should be well below 67.5 cm. Expected trace length on a PCB will be below 10 cm, so this recommendation is easy to fulfill.

The transmitter has the usual I/O pad properties to limit EMI and ringing by limiting the transition speed and driving current. Signal integrity is better as with SPI because the transmitter drives only one receiver and because the line is shorter and has no branches. But anyway, because the line is not terminated, a great part of the RF energy will radiate into the environment and multiple reflexions on both line ends derogate signal integrity.

The voltage level and the electrical parameters of transmitter and receiver are not specified (as is not for SPI), because there are too many variants on the market, and future enhancements cannot be predicted.

### 3.1.2 Medium Speed Device Connection

Speed can be raised to some 10 Mbit/s with source line matching, as shown in Fig. 12.

The line needs only to be terminated at the transmitter with series resistor R. If R = Z (including transmitter's output resistance), then a signal edge will run through the line with $V_{cc}/2$ (Fig. 12, $t_1$). At the end, it is totally reflected by the high-Z CMOS input of the receiver, that represents an open end. This causes the voltage of the edge to double to full $V_{cc}$ and run back through the line to the transmitter (Fig. 12, $t_2$). At the transmitter's side it is absorbed completely by R and the line gets quiet without further ringing (Fig. 12, $t_3$). Compared to the low speed connection, the addition of R has these advantages:

● Good signal quality because the line is matched and does not distort the signal.
● RF is absorbed in R, less radiation.
● Less ringing because no multiple reflexions occur.
● Less power switching noise at the transmitter, because R limits the switching current.
● No overshoot at the receiver, reducing ground noise at the receiver.

Of course this is an idealization. The transmitter may have non-linear output impedance, different for high and low level. The receiver has an input capacity (that should be as low as possible). This limits this approach to some 10 Mbit/s (which is very good for single ended transmission).

### 3.1.3 High Speed Device Connection

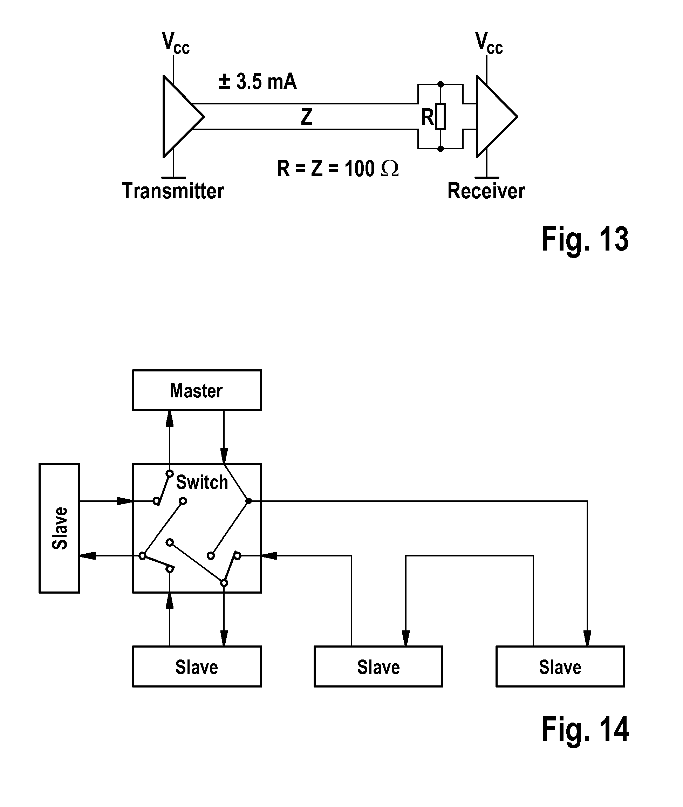

For speed above some 10 Mbit/s and up to some 100 Mbit/s LVDS according to TIA/EIA-644 ($\pm$ 3.5 mA, R = Z = 100 $\Omega \rightarrow \pm$ 350 mV) is recommended, as shown in Fig. 13. Note that the LVDS line is terminated only at the receiver's side. This saves half the power compared to duplex connection which needs termination at both sides and double supply current.

For the price of 4 pins instead of 2 pins and more complex I/O circuitry per device, LVDS offers significant advantages:

● Better noise immunity, because ground noise doesn't matter.
● Less radiation because signal level is lower and signal is symmetrical.
● Less power consumption because voltage at the termination resistor is low.
● No power switching noise because the transmitter works with constant current.
● No signal distortion thanks to symmetrical rise and fall times.

### 3.2 Isochronous Ring

For field bus applications it is essential that all devices share a common time base. This is easy to accomplish. To support field bus applications, a device has to ...

● implement a **time base counter** that is clocked with the Serial WireRing clock, $1 / T_{Bit}$. The number of bits depends on the maximum supported bus clock and the maximum time span. E.g. up to 10 MHz bus clock and a maximum time span of 100 ms give 10 MHz * 100 ms = $10^6$ bus clock cycles = 20 bits to count + 1 sign bit (see next item) = 21 bits total.
● provide a comparator to compare the current time from the time base (see item above) with a time stamp given in a command. If the event always resides in the future, the comparator may be a simple **== comparator.** If it is necessary to catch up an event that has already passed by (of course this should never happen...) then a signed **>= comparator** has to be implemented. In this case the time base has to include an additional sign bit (see item above).
● support the standard command **Reset Clock** (see section 2.9.2.1). With this Broadcast Data Frame the master resets all time base counters of all slaves. However, each slave executes this command with 1 clock cycle delay relative to its predecessor. To compensate this delay, each slave shall reset its time base counter not to 0, but to minus its address. This way all slaves will have their time bases at the same value.
● support commands with a time stamp and/or sample or output data in a pre-defined time raster. In the latter case the slave might use interrupts to request the master for data update.

The master has to sample the time of sending the first bit after the **Reset Clock** frame with its own time base. This time base may be clocked differently from the Serial WireRing, with $f_{tb}$. This sample $S_{zero}$ represents the zero-value of all slaves. If the master wants a slave to take action at master's local time base count $S_{act}$, it has to sent the slave the time stamp

$$\frac{S_{act}}{T_{Bit} \cdot f_{tb}} - S_{zero}$$

$S_{act}$ and $S_{zero}$ must have more bits than the largest time base counter of any slave. 32 bits are recommended.

### 3.3 Fault Tolerant Ring

If one device in a Serial WireRing fails, the whole ring fails. Normally this is no problem, because in this case the whole system is defective anyway. But there a use cases where the system should continue to work (maybe with some restrictions) even if a device has failed. There are several options to design a fault tolerant system, described in the following sections.

All options have in common that the bus has to be re-initialized after a slave has got defective. "Defective slave" means: the slave causes the PLL of its successor to lock-out.

If the master gets defective, system recovery is not possible.

For the master it is recommended to implement an internal switch fabric as described in section 3.3.2 plus Loop Line support as described in section 3.3.3. This offers all options with very little silicon overhead.

For the slaves it is <u>not</u> recommended to implement something special, with the exception of some rare devices that are expected to be operated with Loop Line.

### 3.3.1 External Switch Fabric

As shown in the example of Fig. 14 with 3 slaves, an external switch fabric can be used to bypass any defective slave in order to increase fault tolerance. The switch fabric itself is just another slave. The switch fabric is always the first slave within the ring.

Fig. 14 also shows that more than one slave may be connected to a port of the switch fabric. If one of these slaves fails, all these slaves are bypassed by the switch fabric.

The sequence of events in case of a fault looks like this:

- A slave gets defective and the ring breaks down.
- When the ring comes up again, only the switch fabric is active. The switch fabric bypasses all other slaves. This is the default behavior of the switch fabric.
- The master configures the switch fabric to activate arbitrary slaves after the next re-initialization of the ring. (The master does not know, whether these slaves will operate.)
- After this configuration, the master sets a timeout within the switch fabric and re-initializes the ring.
- The switch fabric detects this re-initialization and activates the slaves as configured by the master.
- If the ring comes up within the timeout, the master cancels the timeout and the ring is ready. The master can re-configure the switch fabric and issue a new try with more slaves.
- If the timeout expires (i.e. the ring doesn't come up with the slaves as configured by the master), the switch fabric enters its reset state and again bypasses all slaves. This causes the ring to come up again with the switch fabric as the only slave. Now the master can issue another try and activate less or different slaves.
- This way the master can find out any defective slave out of 16 within 4 tries. In the example with 4 slaves 2 tries are sufficient.
- The master should remember any defective slave to exclude it right from the start in the future.
- If it makes sense, the master may try to re-activate a defective slave that seems to be operative again.

A more sophisticated switch fabric might detect each slave's signal with own logic. In this case the switch fabric can directly report any defect to the master. During initialization, the switch fabric can deliver the initialization signal to all slaves simultaneously, so that all slaves can initialize simultaneously. In this case this solution is functionally the same as the internal switch fabric, described in the next section 3.3.2.

Pros and Cons of this solution:

+ Can be used with any standard slaves.
+ Any number of slaves may be excluded.
- The switch fabric is an extra device which has to be designed and adds extra cost.
- If the switch fabric gets defective, the whole ring will fail
- PCB layout is no longer a ring, but a more complicated star.

**EP 2 645 638 A1**

- Since the switch fabric is also a slave, only 15 slaves are left to use.

### 3.3.2 Internal Switch Fabric

The switch fabric of the previous section may be integrated into the silicon die of the master. In this case the switch fabric can directly be controlled with normal I/O-ports. No extra IC is needed, no slave address is wasted.
The sequence of events in case of a fault is simpler as with the external switch fabric:

● A slave gets defective and the ring breaks down.
● The master configures the switch fabric to activate arbitrary slaves.
(The master will not know, whether these slaves will operate.)
● The master re-initializes the ring.
● If the ring comes up, the master can start operation or re-configure the switch fabric and issue a new try with more slaves.
● If the ring doesn't come up, the master can issue another try and activate less or different slaves.
● This way the master can find out any defective slave within 4 tries or less.
● The master should remember any defective slave to exclude it right from the start in the future.
● If it makes sense, the master may try to re-activate a defective slave that seems to be operative again.

Pros and Cons of this solution:

+ Can be used with any standard slaves.
+ No additional components.
+ Any number of slaves may get defective
- Extra device-pins are occupied from the master. (However if fault tolerance is not needed or is necessary only for few slaves, the remaining pins can be used for other purposes.)
- PCB layout is no longer a ring, but a more complicated star.

### 3.3.3 Loop Line

The internal switch fabric is the preferred solution for a fault tolerant ring. However, in some cases the star topology is not practical. In this case the Loop Line approach can be used. The price of the Loop Line is doubled number of pins / wires, i.e. 4 instead of 2 single ended. This is why the internal fabric switch is the preferred solution.

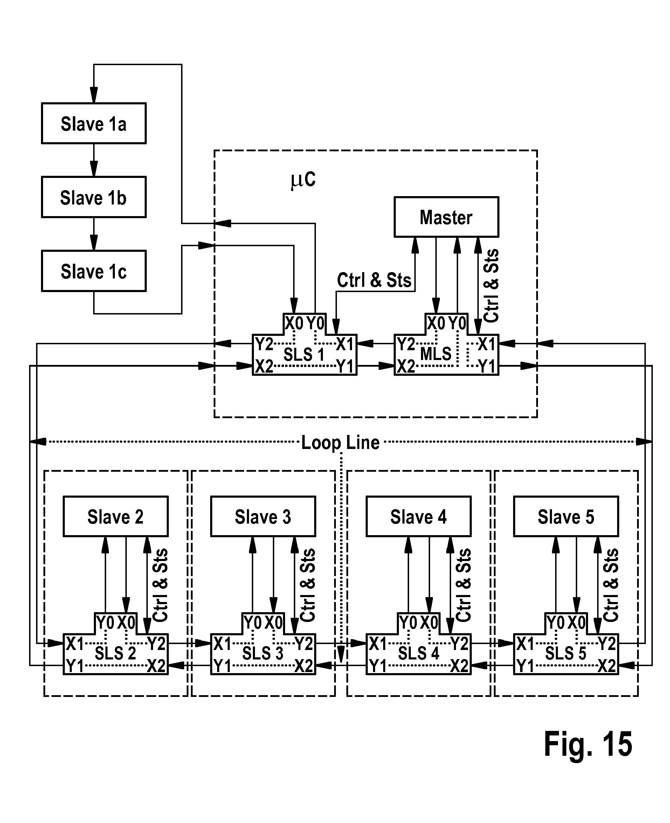

Fig. 15 shows an example with 3 normal slaves and 4 Loop Line enabled slaves:

● The µC contains a normal serial WireRing master and additionally a Master Loop Switch MLS and a Slave Loop Switch SLS 1.
● SLS 1 is used to connect "normal" slaves that do not support the Loop Line via SLS1-X0 and -Y0. An internal fabric switch may be used at this place to get slaves 1 a, 1 b and 1 c fault tolerant, too, as described in section 3.3.2.
● Four slaves 2, 3, 4 and 5 supporting Loop Line are connected to the master, too.
● The sequence of slaves as seen by the master is 1 a, 1 b, 1 c, 2, 3, 4 and 5.

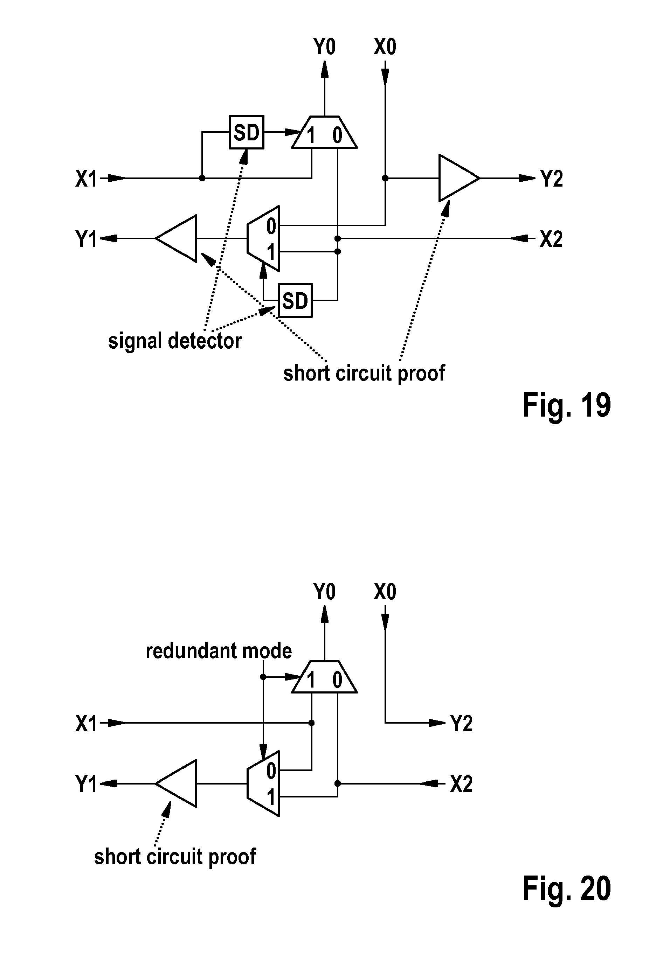

Fig. 15 shows the signal routing within the loop switches for a fault-free ring after start-up.
On master's demand, the Master Loop Switch MLS (Fig. 20) can switch output Y0 to input X1 instead of X2 and output Y1 to input X2 instead of X1.
At start-up, each Slave Loop Switch SLS (Fig. 19) connects output Y0 to input X1, if there is a valid signal. Otherwise it connects Y0 to X2. The same way the SLS connects output Y1 to input X2, if there is a signal. Otherwise it connects output Y1 to input X0. When the ring has come up, the master instructs all SLSs to "freeze" their state up to the next breakdown of the ring. This is important if a failed device becomes operative again. Without the freeze, the ring would possibly change its configuration again and again.
The master can detect, whether a failed slave has become operative again. Then the master can decide whether to re-initialize the ring, putting the regenerated slave into operation gain.
Start- up of the fully operative ring goes like this:

● The master starts sending IFSs SLS1-X1 via MLS-X0 and -Y2.
● This causes SLS1 to switch its output Y0 from X2 to X1.
● Slaves 1 a, 1 b and 1 c initialize one after another.
● The signal from slave 1c on SLS1-X0 feeds SLS1-Y2 and -Y1 (because there is no signal on SLS1-X2 yet).

● The master receives slave 1's signal but does not take this for serious yet.
● Slave 2 initializes on slave 1's signal.
● The signal from slave 2 on SLS2-X0 feeds SLS2-Y2 and -Y1 (because there is no signal on SLS2-X2 yet).
● The signal from SLS2-Y1 causes SLS1 to switch its Y1 from X0 to X2. Now the master receives the signal from slave 2.
● The last 3 steps repeat for each following Loop Line enabled slave.
● In the end all SLSs are in the state as shown in Fig. 15.
● The master instructs all Loop Line enabled slaves to freeze their SLS state.

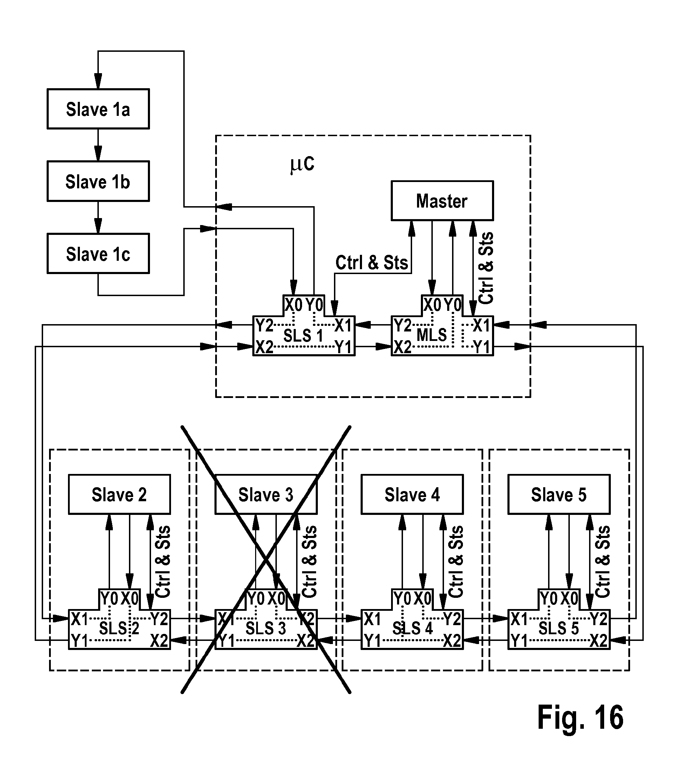

Now let us assume that slave 3 gets defective (see Fig. 16):

● The ring breaks down.
● The master starts re-initialization by sending IFSs.
● SLS1 connects Y0 to X1 and X0 to Y1 & Y2, slaves 1a, 1b, 1c initialize normally. The signal from slave 1 c now goes to SLS2-X1 and to SLS5-X2.
● SLS2 connects X1 to Y0, causing slave 2 to start initializing.
● SLS5 connects X2 to Y0 & Y1, causing slave 5 to start initializing.
● With the signal from SLS4-Y1, SLS4 connects X2 to Y0 & Y1, causing slave 4 to start initializing.
● When slave 2 has initialized, its signal arrives at SLS1-X2 via SLS2-X0 and -Y1. This causes SLS1 to connect Y1 to X2 instead of X0.
● When slave 4 has initialized, its signal arrives at SLS5-X1 via SLS4-X0 and -Y2. This causes SLS5 to connect Y0 to X1 instead X2.
● Now the ring is ready with slave sequence 1 a, 1 b, 1 c, 2, 4 and 5. The loop line is in operation. However the master does not know yet which slave is missing.
● The master asks each Loop Line enabled slave whether it receives a signal on X1. The negative answer comes from the slave 4 (from the master's point of view this is slave 3). Now the master knows that slave 3 is defective and indexes 3 & 4 belong to slaves 4 & 5, while index 5 is obsolete.
● The master locks the signal detectors of slave 2 & 4. So, slave 3 stays off even if it comes up again and provides a signal on SLS3-Y1 or -Y2.

Please note:

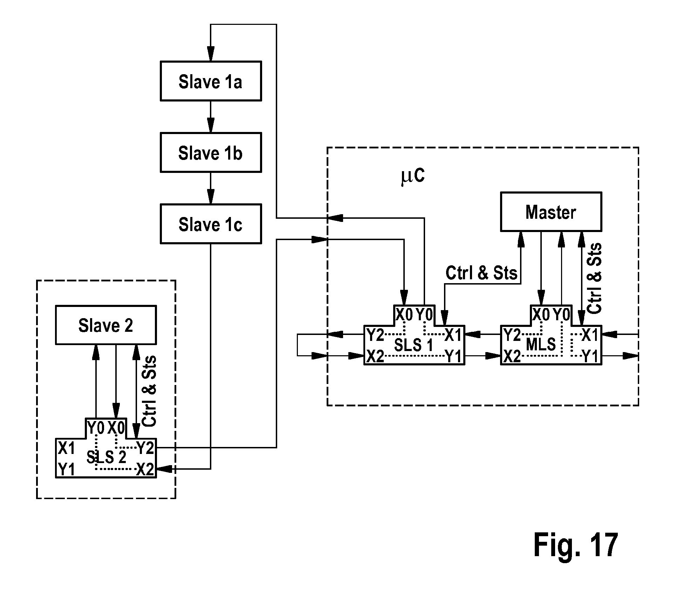

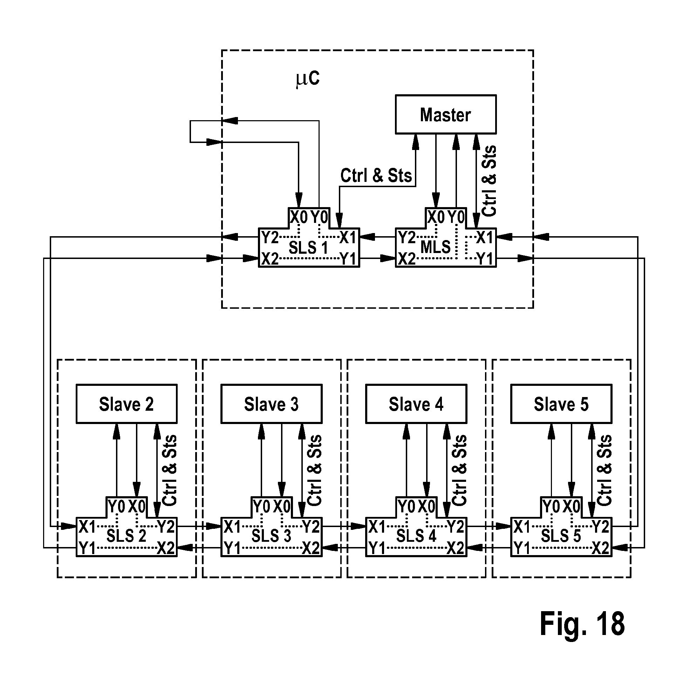

● Additionally an internal switch fabric as described in section 3.3.2 may be used at the master's X0 & Y0 lines.
● All Loop Line enabled slaves initialize simultaneously.
● The sequence of slaves in redundant mode doesn't change.
● If more than 1 slave gets defective, all slaves between them are lost.
● The loop switches are integrated into the devices. No external circuitry is necessary.
● If no Loop Line enabled slaves are used, the master's X2 & Y2 must be shorted and X1 & Y1 can be left open, as shown in Fig. 17. In practice these signals will be handled chip-internally and the 4 pins may be used for other purposes.
● If no normal slaves are used, the master's X0 & Y0 must be connected, as shown in Fig. 18. In practice, X0 & Y0 will be connected chip-internally and the 2 pins may be used for other purposes.
● A Loop Line enabled slave may also be connected to a normal ring, as shown in Fig. 17.

Fig. 19 shows the Slave Loop Switch SLS. It is quite simple:

● Y2 is driven by X0 via a short circuit proof driver. This avoids any feedback from the next slave that is connected to Y2.
● Y1 is driven by X2, if it provides a valid signal. Otherwise it is driven by X0. Again, a short circuit proof driver ensures that the device is not damaged if the preceding device connected to Y1 fails and presents a short on Y1.
● Y0 is driven by X1, if it provides a valid signal. Otherwise it is driven by X2.
● The two multiplexers can be decoupled from the signal detectors and forced to a certain state by configuration. At initialization, however, the automatic mode is accomplished.

Fig. 20 shows the Master Loop Switch MLS. In normal mode X1 drives Y1, reflecting the last slave's output signal into the loop line in reverse direction. This signal in turn arrives at X2 and drives the master's receiver via Y0.
When a failure has occurred, software sets the "redundant mode" line to 1, activating redundant mode of the loop. Now X2 from the last operating slave before the defective one drives Y1, feeding the first slave behind the defective one. The very last slave drives the master via X1.

When all slaves are operative, redundant mode should remain unselected. Otherwise the loop line would be without signal. This would cause one or more SLSs to connect their Y1 to X0 instead of X2. This in turn would cause other SLSs to switch back from X2 to X0. This uncontrolled switching would continue endlessly.

Pros and Cons of this solution:

+ Spatial ring topology preserved.
+ No additional components.
- Extra pins are occupied at the master.
- Slave must be designed for Loop Line support.
- Doubled pin count for each Loop Line enabled slave.
- 2 rings instead of 1.
- Only 1 defective slave fully supported.
- Does not conform to KISS principles.

### 3.4 Multiple Slaves In One Package

More than 1 slave may be integrated into a single package. On the master's side, each slave has its own

● Unicast Data Frame queue
● DMA channel for data I/O
● interrupt

But all slaves within the same package can share the same (silicon space consuming) PLL and I/O pad structures. So this option is very cost effective.

### 3.5 Support of D$^2$PAK Devices

"Smart power devices" are widely used. They are available in versatile D$^2$PAK packages like TO-220, TO-263 and TO-252. However these packages only allow a maximum of 5 pins. Since this is not enough for SPI or any other bus available today, all these devices have to be driven manually: one wire for driving and maybe one extra wire for diagnosis and status. A bus concept to cascade any number of devices is very desirable.

Serial WireRing makes it possible to integrate the bus into a 5 pin package, e.g.:

Pin 1: VSS
Pin 2: RxD
Pin 3: VDD
Pin 4:TxD
Pin 5: OUT

### 3.6 Support of SOT-23 Devices

The "pin count problem" not only applies to power devices, as described in the previous section 3.5. It is also true for small signal devices, like port extenders, gate drivers, ADCs, DACs, signal generators and any other kind of "small" functions.

System design often calls for these functions in single entity. But because of the many bus pins, such devices could not be realized yet in small and inexpensive packages like SOT-23. With Serial WireRing this can be done.

The pin-out may look like this:

Pin 1: VDD
Pin 2: RxD
Pin 3:TxD
Pin 4: VSS
Pin 5 & 6: for the desired function

The maximum baud rate of such a ring may get very high, up to some 10 MHz single ended, if the spatial distances between the devices are kept small.

### 3.7 Replacement of SPI

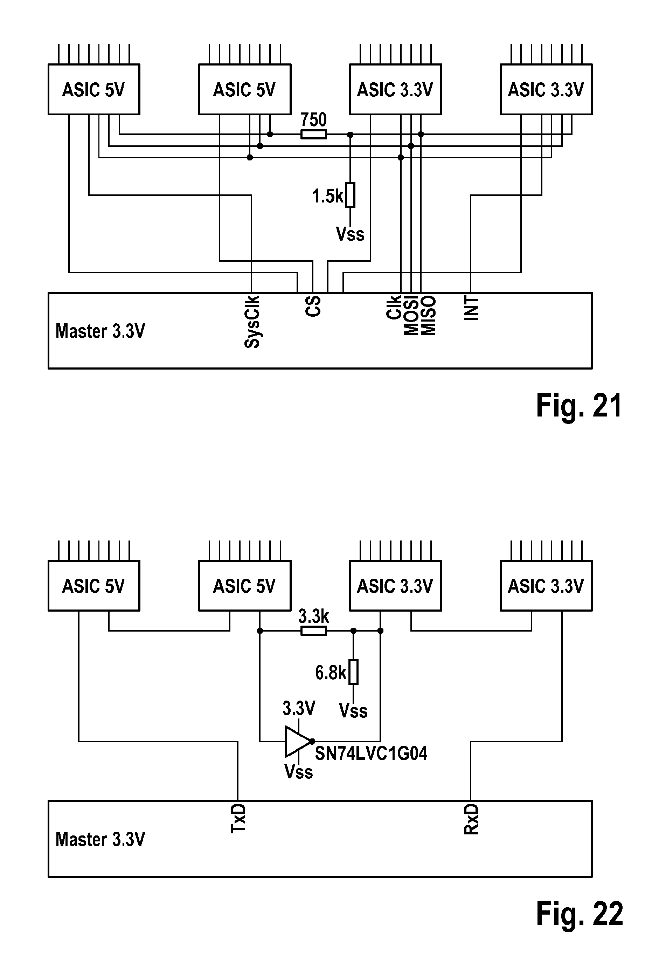

Fig. 21 shows a typical SPI application with mixed voltages, as common today. There are many pins and wires involved. The voltage divider must have an impedance low enough to drive all the nodes on the 3.3 V MISO lines, but high enough to not overload the MISO outputs of the 3.3 V slaves. This is always a compromise, degrading speed and drawing much current.

The same system using Serial WireRing according to the present invention has much less pins and wires, as shown in Fig. 22. The voltage divider (blue option) only drives a single input with a short wire. So its impedance can be much higher for reasonable speed. No resistive load is put on the outputs of the 3.3 V devices.

For full speed, the divider may be replaced by a single inverter, operating as a voltage converter (green option). This is not possible in the know system of Fig. 21, because a tri-state-driver with "intelligent" gating would be required.

### 3.8 Replacement of I$^2$C

Serial WireRing may replace I$^2$C with the same pin count and with these Pros and Cons:

+ Much faster
+ No slave address needed
+ Interrupts provided
+ Clock provided
+ Higher safety level
- More complex circuitry (greater silicon area, higher gate-count)

### 3.9 Replacement of Micro Second Channel

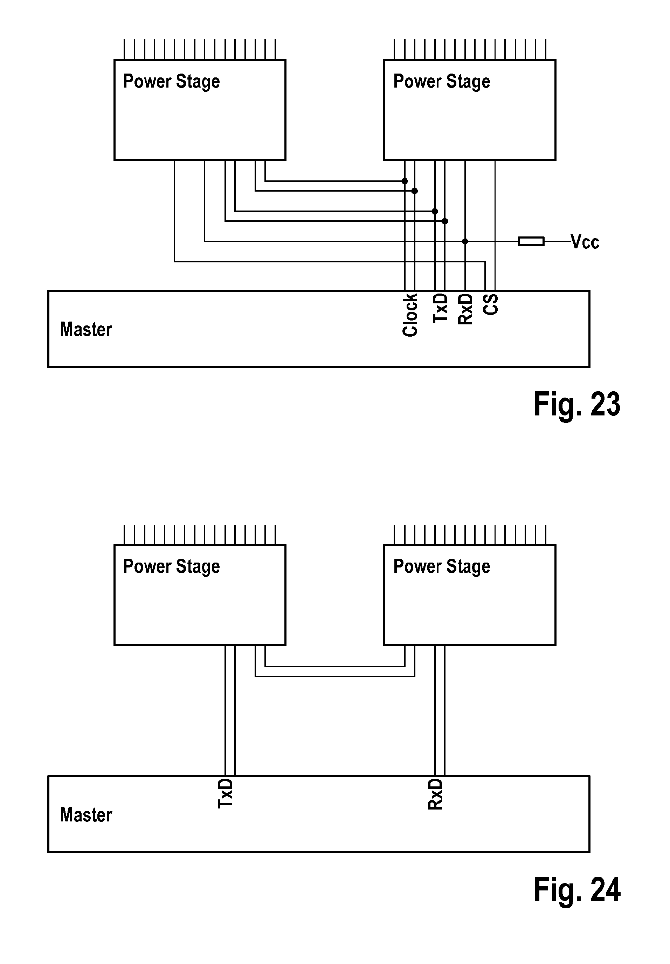

The Micro Second Channel (MSC) was developed to save pins for driving power stages. Fig. 23 shows a typical MSC circuit known from the prior art. Instead of driving each power stage with a separate wire, all signals are stored into a shift register and clocked out at least once per microsecond. This is where the name Serial WireRing comes from. Updating every 1 μs is fast enough for many signals; including PWM signals of up to some 100 Hz. MSC introduces some jitter (1 μs) into the PWM signal. This is acceptable for many signals.

MSC is very simple and straight-forward. It only contains clock, Tx data, Rx data and chip select. Clock and Tx data use LVDS. Rx data is only used for diagnostics, with a lower baud rate to omit LVDS. All slaves use the same Rx data line with open drain drivers.

Because of the slow Rx channel, MSC cannot be used as a port extender for (fast) input signals.

For the price of higher baud rate (see below) Serial WireRing can replace MSC (see Fig. 24) with some benefits:

● Only 2 or 4 pins on all devices.
● Fully duplex, scanning of PWM inputs and read-back of PWM outputs possible.
● Synchronous update / sampling of up to 256 signals.
● If CMOS connections are used, 5- and 6-pin-devices as described in section 3.5 and 3.6 can be used.
● Higher safety level without additional circuitry.

Replacement of MSC with Serial WireRing might look like this:

● A Multicast Data Frame is used to transport the data from master to all power stages simultaneously with best bandwidth utilization. Up to 256 bits can be transferred this way.
● This Multicast Data Frame has its own queue and the master uses the fixed address of a register with the output data as the data source. This Multicast Data Frame is repeated endlessly and makes up > 99% of the bus load.
● This Multicast Data Frame is recognized by each slave to set the power stages.
● Separate Unicast Data Frames from different queues are used to configure each power stage and to retrieve its status. These Unicast Data Frames have higher priority than the Multicast Data Frame. They are inserted regularly, but slowly (e.g. each millisecond) by software. The additional jitter is not higher than with MSC, where "control frames" occur between the regular "data frames".
● Besides the power stages, no other slaves should be placed into the ring, because their traffic would cause higher jitter on the power stages.

The required baud rate for a given cycle time is determined by the number of power stages P and the total number of signal bits N. The Multicast Data Frame has 18+P bits overhead (with CRC activated) + 4 bits for the IFS.

So bandwidth utilization is N / (N+P+22). Obviously this gets better with increasing number of power stages and bits. E.g. with 1 to 6 16-fold power stages:

| Number of power stages, P | 1 | 2 | 3 | 4 | 5 | 6 |
|---|---|---|---|---|---|---|
| Number of bits, N | 16 | 32 | 48 | 64 | 80 | 96 |
| Bandwidth utilization, % | 41 | 57 | 66 | 71 | 75 | 77 |
| Required baud rate for 2 $\mu$s cycle time, MHz | 19.5 | 28 | 36.5 | 45 | 53.5 | 62 |
| MSC LVDS pins Master / Slave | 6/6 | 7/6 | 13/6 | 14/6 | 20/6 | 21/6 |
| SWR LVDS pins Master / Slave | 4/4 | 4/4 | 4/4 | 4/4 | 4/4 | 4/4 |

Some remarks on the baud rate:

● In practice, MSC is often operated with a frequency too low to reach the 1 $\mu$s target. 16...20 MHz are common. With two 16-fold power stages and some overhead for chip select, this gives about 2 $\mu$s of cycle time. This is the reason why the baud rate is calculated for 2 $\mu$s cycle time.
● We expect Serial WireRing to work with source terminated single ended signaling up to 50 MHz. So LVDS may not be necessary, reducing the pin count to 2 / 2. This also gives an option to use 5- and 6-pin packages like SOT-23, TO-220, TO-263 and TO-252.
● MSC supports up to 2 power stages. More cannot be connected because the reflexions on the common clock and data lines deteriorate signal quality too much. LVDS doesn't help for this. Serial WireRing can drive up to 256 signals synchronously and is limited only by the maximum baud rate of the devices.

**3.10 Replacement of Serializer/ Deserializer**

Serializer/Deserializers are used mainly for video data from cameras or to drive displays. Many solutions are on the market, optimally tailored for certain applications:

● with a single or multiple lanes
● simplex or duplex
● with or without embedded control signals
● with separate or embedded clock
● with or without CRC
● with or without PLL
● for short PCP wires up to some 100 m cable of different quality
● with more or less sophisticated equalization
● with or without skew compensation

Advantage: for any application there is an optimal solution. Disadvantage: there is no standard; the receiver must fit to the transmitter. Usually this means that both have to be provided by the same manufacturer, without second source.
Serializer/Deserializers are intended for point to point data transport. There is no addressing etc. It is not a bus.
Up to some 100 Mbit/s Serial WireRing may be an alternative to Serializer/Deserializer:

+ Serial WireRing is a standard: different ICs from different manufacturers may communicate this way.
+ No other extra interface (IP on the $\mu$C) is necessary.
+ Simplex (using Link Mode) or Duplex (using Ring Mode) - minimal number of pins / wires.
+ Embedded clock
+ Embedded control signals
+ CRC provided
+ High safety level - also applicable for critical data
- Only for PCB, not for long distance cable
- Bandwidth restricted to some 100 Mbit/s
- Lower bandwidth utilization (10B8B is better than MFM)

### 3.11 Replacement of USART

To transport high data volume from one IC to another on a PCB, often the Universal Synchronous/Asynchronous Receiver/Transmitter USART is used in synchronous mode. Technically this seems strange: the USART was not designed for this application. However there are some very practical reasons to use it:

+ The USART is present on most μCs. There is no cost to use it.
+ USART looks like a standard (although it is not). But it is less diverse than Serializer/Deserializer.
+ Very simple.

Often this is more important than the draw-backs:

- 8 pins / wires needed for a full duplex LVDS connection.
- No embedded clock.
- Usually byte-oriented. 16-bit and 32-bit entities are rare.
- Point to point only - not a bus.
- Difficult to embed control signals.

In most cases it is more advantageous to use Serial WireRing for this kind of application.

### Claims

1. Communication system comprising at least two communication modules serially interconnected by a communication medium having a daisy chain ring topology, wherein at least one of the modules acts as a master-module and the other modules act as slave modules and wherein data is transmitted across the communication medium in data frames, **characterized in that** the master module is adapted to transmit a data frame, which is addressed to at least one of the slave modules, to the first slave module in the daisy chain ring topology, that all slave modules are adapted to pass through the data frame to the next module in the daisy chain ring topology and **in that** the master module is adapted to receive the data frame from the last slave module in the daisy chain ring topology and to check whether the data frame has been successfully transmitted along the entire daisy chain ring topology and/or successfully received by the at least one slave module it was addressed to.

2. Communication system according to claim 1, **characterized in that** each of the slave modules is adapted to receive and process the data frame and the data contained therein, respectively, only if the data frame is addressed to the slave module.

3. Communication system according to claim 2, **characterized in that** each of the slave modules is adapted to replace any number of bits of the data frame with an answer to the master module, only if the data frame is addressed to the slave module.

4. Communication system according to any of the preceding claims, **characterized in that** each of the slave modules comprises input/ output storing means for temporarily storing at least part of data frames to be transmitted across the communication medium and/or at least part of data frames received across the communication medium and intended for the slave module and comprises further storing means located within the daisy chain ring topology of the communication medium and having a smaller storage capacity than the input/ output storing means and being adapted for passing through data frames transmitted across the communication medium.

5. Communication system according to claim 4, **characterized in that** each of the slave modules is adapted to forward from its further storage means to its input/output storage means at least part of a data frame transmitted across the communication medium only if the data frame currently passing through the further storage means is addressed to the slave module.

6. Communication system according to any of the preceding claims, **characterized in that** the further storage means comprise a shift register, preferably a 1-Bit shift register.

7. Communication system according to any of the preceding claims, **characterized in that** data frames are continuously transmitted across the communication medium.

8. Communication system according to claim 7, **characterized in that** as long no payload data is to be transmitted in the communication system, the master module transmits data frames with no payload data.

9. Communication system according to any of the preceding claims, **characterized in that** the master module is adapted to transmit a dedicated data frame, the so-called Interframe Symbol, between each two data frames transmitted across the communication medium.

10. Communication system according to claim 9, **characterized in that** each of the slave modules is adapted to determine the end of a data frame or the beginning of a new data frame respectively by means of the Interframe Symbol.

11. Communication system according to claim 9 or 10, **characterized in that** each of the slave modules is adapted to synchronize its local clock by means of the Interframe Symbol.

12. Communication module adapted for use in a communication system comprising the communication module and at least one further communication module, the communication modules being serially interconnected by a communication medium having a daisy chain ring topology, wherein the module is adapted to act as master-module and the at least one further module acts as a slave module and wherein data is transmitted across the communication medium in data frames, **characterized in that** the master module is adapted to transmit a data frame, which is addressed to at least one of the slave modules, to the first slave module in the daisy chain ring topology, which passes through the data frame to the next module in the daisy chain ring topology and **in that** the master module is adapted to receive the data frame from the last slave module in the daisy chain ring topology and to check whether the data frame has been successfully transmitted along the entire daisy chain ring topology and/or successfully received by the at least one slave module it was addressed to.

13. Communication module adapted for use in a communication system comprising the communication module and at least one further communication module, the communication modules being serially interconnected by a communication medium having a daisy chain ring topology, wherein the or one of the at least one further modules is adapted to act a master-module and the communication module acts as a slave module and wherein data is transmitted across the communication medium in data frames, **characterized in that** the slave module is adapted to pass through a data frame received across the communication medium from a preceding module in the daisy chain ring topology to the successive module in the daisy chain ring topology, the data frame being addressed to at least one of the slave modules, and the slave module is adapted to receive and process the data frame and the data contained therein, respectively, only if the data frame is addressed to the slave module.

14. Method for transmitting data within a communication system comprising at least two communication modules serially interconnected by a communication medium having a daisy chain ring topology, wherein at least one of the modules acts as a master-module and the other modules act as slave modules and wherein data is transmitted across the communication medium in data frames, **characterized in that** the master module transmits a data frame containing the data to be transmitted, which is addressed to at least one of the slave modules, to the first slave module in the daisy chain ring topology, that the first slave module passes through the data frame to the next module in the daisy chain ring topology and so on until the master module receives the data frame from the last slave module in the daisy chain ring topology and checks whether the data frame has been successfully transmitted along the entire daisy chain ring topology and/or successfully received by the at least one slave module it was addressed to.

Fig. 1

Fig. 2

Fig. 3

Fig. 4

Fig. 5

Fig. 6

Fig. 7

Fig. 8

EP 2 645 638 A1

IFS     IFS     IFS     IFS

$T_{Bit}$   $3\, T_{Bit}$

# Fig. 9

WIRI_FRM
WIRI_FRR0...15
WIRI_FRI0...15

WIRI_TXM
WIRI_TXR0...15
WIRI_TXI0...15

WIRI_RXR0...15
WIRI_RXI0...15

| magic | | | | | | |
|---|---|---|---|---|---|---|
| next | | | | | | |
| txAdr | | | | | | |
| rxAdr | | | | | | |
| rx | rxInc | – | rxBits | – | txInc | txBits |
| – | priority | repeat | bu | – | max | intEn |

WiriDataFrame
6...32-bit-words

RX data      TX data

# Fig. 10

Fig. 11

Fig. 12

$V_{cc}$

± 3.5 mA

Z

R

R = Z = 100 Ω

$V_{cc}$

Transmitter

Receiver

**Fig. 13**

Master

Switch

Slave

Slave

Slave

Slave

**Fig. 14**

Fig. 15

Fig. 16

Fig. 17

Fig. 18

Y0    X0

X1

Y1

SD

1   0

0
1

SD

Y2

X2

signal detector

short circuit proof

**Fig. 19**

Y0    X0

redundant mode

X1

Y1

1   0

0
1

Y2

X2

short circuit proof

**Fig. 20**

ASIC 5V  ASIC 5V  ASIC 3.3V  ASIC 3.3V

750

1.5k

Vss

Master 3.3V

SysClk  CS  Clk MOSI MISO  INT

## Fig. 21

ASIC 5V  ASIC 5V  ASIC 3.3V  ASIC 3.3V

3.3k

6.8k

3.3V  Vss

SN74LVC1G04

Vss

Master 3.3V

TxD  RxD

## Fig. 22

Power Stage

Power Stage

Vcc

Clock TxD RxD CS

Master

**Fig. 23**

Power Stage

Power Stage

TxD RxD

Master

**Fig. 24**

Europäisches
Patentamt

European
Patent Office

Office européen
des brevets

**EUROPEAN SEARCH REPORT**

Application Number

EP 12 18 8283

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 638 366 A (GRAY THOMAS A [CA]) 10 June 1997 (1997-06-10) * columns 3-5; figures 2-4B * * * * * ----- | 1-14 | INV. H04L12/423 |
|  |  |  | TECHNICAL FIELDS SEARCHED (IPC) |
|  |  |  | H04L |

The present search report has been drawn up for all claims

| Place of search | Date of completion of the search | Examiner |
|---|---|---|
| The Hague | 18 June 2013 | Dupuis, Hervé |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 2 645 638 A1

**ANNEX TO THE EUROPEAN SEARCH REPORT
ON EUROPEAN PATENT APPLICATION NO.**                    EP 12 18 8283

This annex lists the patent family members relating to the patent documents cited in  the above-mentioned European search report.
The members are as contained in the European Patent Office EDP file on
The European Patent Office is in no way liable for these particulars which are merely given for the purpose of information.

18-06-2013

| Patent document cited in search report | | Publication date | Patent family member(s) | | Publication date |
|---|---|---|---|---|---|
| US 5638366 | A | 10-06-1997 | CA | 2058654 A1 | 01-07-1993 |
| | | | DE | 4243266 A1 | 01-07-1993 |
| | | | GB | 2263043 A | 07-07-1993 |
| | | | IT | 1256745 B | 15-12-1995 |
| | | | US | 5638366 A | 10-06-1997 |

For more details about this annex : see Official Journal of the European Patent Office, No. 12/82